(19) **Europäisches Patentamt / European Patent Office / Office européen des brevets**

(11) **EP 4 648 494 A1**

(12) **EUROPEAN PATENT APPLICATION**
published in accordance with Art. 153(4) EPC

(43) Date of publication:
**12.11.2025 Bulletin 2025/46**

(21) Application number: **24738433.2**

(22) Date of filing: **02.01.2024**

(51) International Patent Classification (IPC):
**H04W 52/02** (2009.01)

(52) Cooperative Patent Classification (CPC):
**H04W 52/02;** Y02D 30/70

(86) International application number:
**PCT/CN2024/070058**

(87) International publication number:
**WO 2024/146500 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2023 CN 202310021825**

(71) Applicant: **Apogee Networks, LLC**
**Dallas, TX 75201 (US)**

(72) Inventors:
- **LIU, Zheng**
  **Shanghai 201206 (CN)**
- **JIANG, Qi**
  **Shanghai 201206 (CN)**
- **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD USED IN NODE FOR WIRELESS COMMUNICATION AND APPARATUS**

(57)     Disclosed in the present application are a method used in a node for wireless communication and an apparatus. The method comprises: a node receives a first information block; and the node monitors W1 wake-up signals and determines whether to monitor in a first occasion a first signaling, W1 being a positive integer greater than 1, the first information block being used for determining a configuration parameter value of at least one wake-up signal among the W1 wake-up signals, and an identifier of a first node being used for determining the first occasion, wherein any one of the W1 wake-up signals carries at least one device group, any one device group carried by any one of the W1 wake-up signals comprises at least one device, and the number of wake-up signals that carry device groups comprising the first node among the W1 wake-up signals is used for determining whether to monitor in the first occasion the first signaling. The present application saves power.

FIG. 1

EP 4 648 494 A1

**Description**

**Technical Field**

The present application relates to a transmission method and apparatus in a wireless communication system, and in particular to a low-power transmission solution and apparatus in wireless communication.

**Background Art**

The application scenarios of wireless communication systems are becoming increasingly diversified in future, and different application scenarios impose different performance requirements on the systems. In order to meet the different performance requirements of various application scenarios, it was decided at the #72 plenary meeting of the 3GPP (3rd Generation Partner Project) RAN (Radio Access Network) to carry out study on the new radio technology (NR) (or 5G). At the #75 plenary meeting of the 3GPP RAN, the WI (Work Item) of the new radio technology (NR) was approved, and the standardization work on NR was initiated.

In the new radio technology, power consumption is an important indicator to measure technical performance. In order to adapt to diversified application scenarios and meet different needs, 3GPP has been continuously evolving technologies for reducing power consumption.

**Summary of the Invention**

Among various technologies for reducing power consumption, waking up a receiver of user equipment (UE) or a network device (gNB/eNB) in advance via a wake-up signal is regarded as an effective method. In response to the needs for reducing power consumption in NR systems, the present application discloses a solution. It should be noted that in the description of the present application, reducing power consumption is only used as a typical application scenario or example; the wake-up signals in the present application are also applicable to other scenarios facing similar problems (such as other scenarios that require pre-wake-up, including but not limited to, capacity enhancement systems, systems for short-range communications, unlicensed frequency domain communications, IoT (Internet of Things), URLLC (Ultra Reliable Low Latency Communication) networks, Internet of Vehicles, etc.), and may also achieve similar technical effects. In addition, using a unified solution for different scenarios (including but not limited to, multi-carrier scenarios) can also help to reduce hardware complexity and cost. In the absence of conflict, embodiments and features in the embodiments of a first node device of the present application may be applied to a second node device, and vice versa. In particular, the interpretation of the terminologies, nouns, functions, and variables in the present application (if not specifically noted) may refer to the definitions in the specification protocols TS36 series, TS38 series, and TS37 series of 3GPP.

The present application discloses a method used in a first node for wireless communication, characterized by comprising:

receiving a first information block; and
monitoring W1 wake-up signals and determining whether to monitor in a first occasion a first signaling, W1 being a positive integer greater than 1,
wherein the first information block is used for determining a configuration parameter value of at least one wake-up signal among the W1 wake-up signals, and an identifier of the first node is used for determining the first occasion; any one of the W1 wake-up signals carries at least one device group, and any one device group carried by any one of the W1 wake-up signals comprises at least one device; and the number of wake-up signals that carry device groups comprising the first node among the W1 wake-up signals is used for determining whether to monitor in the first occasion the first signaling.

As one embodiment, by simultaneously monitoring a plurality of wake-up signals, the probability of false wake-up is reduced.

As one embodiment, whether to wake up is determined by the number of wake-up signals that carry device groups comprising the same device among the plurality of wake-up signals, thereby further optimizing power consumption.

According to one aspect of the present application, the above method is characterized in that when there exists one wake-up signal among the W1 wake-up signals that is not detected or there exists one wake-up signal among the W1 wake-up signals that does not carry any device group comprising a first node device, the first node device abandons monitoring in the first occasion the first signaling; otherwise, the first node device monitors in the first occasion the first signaling.

According to one aspect of the present application, the above method is characterized by comprising:

sending a second information block,
wherein the second information block is used for indicating at least one band, and the first node device supports reception of wake-up signals on each band indicated by the second information block.

As one embodiment, by supporting the reception of the wake-up signals on each band indicated by the second information block, the performance of the receiver may be considered more flexibly, and the configuration and reception performance of the wake-up signals may be optimized.

According to one aspect of the present application, the above method is characterized by comprising:

determining whether to monitor a second signaling,
wherein the second signaling is used for indicating whether to monitor in the first occasion the first signaling; and the number of wake-up signals that carry device groups comprising the first node device among the W1 wake-up signals is used for determining whether to monitor the second signaling.

According to one aspect of the present application, the above method is characterized in that the first information block is used for determining the number of wake-up signals associated with the first occasion, and the first information block is used for determining the number of occasions associated with the W1 wake-up signals.

According to one aspect of the present application, the above method is characterized in that a target wake-up signal is one wake-up signal among the W1 wake-up signals, and a target identifier is an identifier of one device group to which the first node device belongs; and a first number value is equal to the number of wake-up signals that carry device groups comprising the first node device among the W1 wake-up signals, whether the target wake-up signal is counted into the first number value is related to whether the target wake-up signal carries the target identifier, and the target identifier is related to a time-frequency position of the target wake-up signal.

According to one aspect of the present application, the above method is characterized in that the first node device is one device comprised in a first device group, the first device group is one of Y1 device groups, Y1 identifiers correspond to the Y1 device groups, respectively, and any one of the Y1 device groups comprises at least one device, Y1 being a positive integer greater than 1; and a first identifier and a second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

The present application discloses a method used in a second node for wireless communication, characterized by comprising:

sending a first information block; and
sending W1 wake-up signals and sending in a first occasion a first signaling, W1 being a positive integer greater than 1, wherein the first information block is used for determining a configuration parameter value of at least one wake-up signal among the W1 wake-up signals, and an identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

According to one aspect of the present application, the above method is characterized in that when there exists one wake-up signal among the W1 wake-up signals that is not detected or there exists one wake-up signal among the W1 wake-up signals that does not carry any device group comprising the monitor of the W1 wake-up signals, the monitor of the W1 wake-up signals abandons monitoring in the first occasion the first signaling; otherwise, the monitor of the W1 wake-up signals monitors in the first occasion the first signaling.

According to one aspect of the present application, the above method is characterized by comprising:

receiving a second information block,
wherein the second information block is used for indicating at least one band, and a sender of the second information block supports reception of wake-up signals on each band indicated by the second information block.

According to one aspect of the present application, the above method is characterized by comprising:

sending a second signaling,
wherein the second signaling is used for indicating whether to monitor in the first occasion the first signaling; and the number of wake-up signals that carry device groups comprising the monitor of the W1 wake-up signals among the W1 wake-up signals is used for determining whether to monitor the second signaling.

According to one aspect of the present application, the above method is characterized in that the first information block is used for determining the number of wake-up signals associated with the first occasion, and the first information block is used for determining the number of occasions associated with the W1 wake-up signals.

According to one aspect of the present application, the above method is characterized in that a target wake-up signal is one wake-up signal among the W1 wake-up signals, and a target identifier is an identifier of one device group to which the monitor of the W1 wake-up signals belongs; and a first number value is equal to the number of wake-up signals that carry device groups comprising the monitor of the W1 wake-up signals among the W1 wake-up signals, whether the target wake-up signal is counted into the first number value is related to whether the target wake-up signal carries the target identifier, and the target identifier is related to a time-frequency position of the target wake-up signal.

According to one aspect of the present application, the above method is characterized in that the monitor of the W1 wake-up signals is one device comprised in a first device group, the first device group is one of Y1 device groups, Y1 identifiers correspond to the Y1 device groups, respectively, and any one of the Y1 device groups comprises at least one device, Y1 being a positive integer greater than 1; and a first identifier and a second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

The present application discloses a first node device for wireless communication, characterized by comprising:

a first transceiver, receiving a first information block; and
a first receiver, monitoring W1 wake-up signals and determining whether to monitor in a first occasion a first signaling, W1 being a positive integer greater than 1,
wherein the first information block is used for determining a configuration parameter value of at least one wake-up signal among the W1 wake-up signals, and an identifier of the first node device is used for determining the first occasion; any one of the W1 wake-up signals carries at least one device group, and any one device group carried by any one of the W1 wake-up signals comprises at least one device; and the number of wake-up signals that carry device groups comprising the first node device among the W1 wake-up signals is used for determining whether to monitor in the first occasion the first signaling.

The present application discloses a second node device for wireless communication, characterized by comprising:

a second transceiver, sending a first information block; and
a first transmitter, sending W1 wake-up signals and sending in a first occasion a first signaling, W1 being a positive integer greater than 1,
wherein the first information block is used for determining a configuration parameter value of at least one wake-up signal among the W1 wake-up signals, and an identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

**Brief Description of the Drawings**

Other features, purposes and advantages of the present application will become more apparent from reading the detailed description of the non-limiting embodiments made with reference to the following drawings:

FIG. 1 shows a flowchart of a first information block, W1 wake-up signals and a first signaling according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first node device and a second node device according to one embodiment of the present application;
FIG. 5 shows a flowchart of radio signal transmission according to one embodiment of the present application;
FIG. 6 shows another flowchart of radio signal transmission according to one embodiment of the present application;
FIG. 7 shows a schematic diagram of a relationship between W1 wake-up signals and a first signaling according to one embodiment of the present application;

FIG. 8 shows a schematic diagram of a relationship between a second signaling and a first signaling according to one embodiment of the present application;

FIG. 9 shows a schematic diagram of a relationship between W1 wake-up signals and a first occasion according to one embodiment of the present application;

FIG. 10 shows a schematic diagram of a relationship between a target identifier and a target wake-up signal according to one embodiment of the present application;

FIG. 11 shows a schematic diagram of a first identifier and a second identifier according to one embodiment of the present application;

FIG. 12 shows a structural block diagram of a processing apparatus in a first node device according to one embodiment of the present application; and

FIG. 13 shows a structural block diagram of a processing apparatus in a second node device according to one embodiment of the present application.

**Detailed Description of Embodiments**

The technical solution of the present application will be further described in detail below in conjunction with the drawings. It should be noted that, in the absent of conflict, embodiments and features in the embodiments of the present application may be arbitrarily combined with each other.

**Embodiment 1**

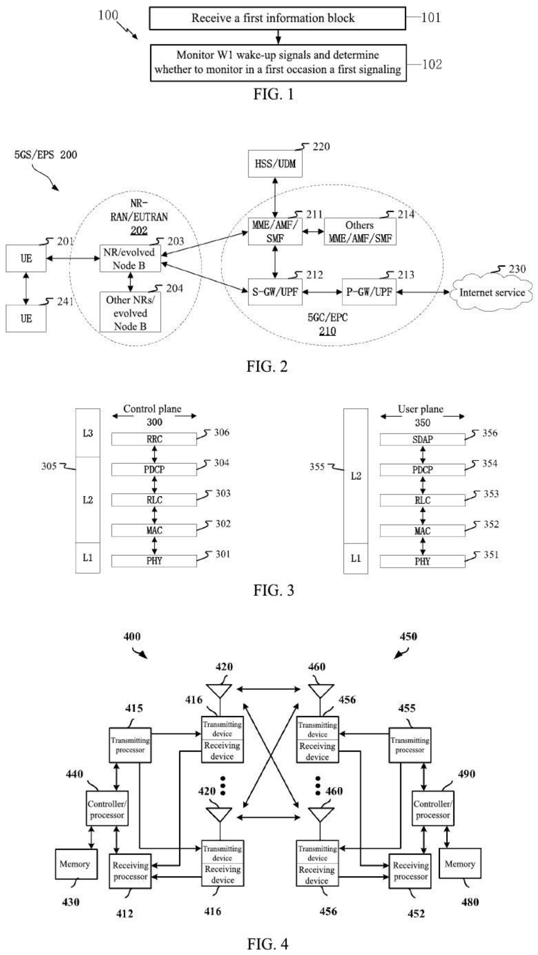

Embodiment 1 illustrates a flowchart 100 of a first information block, W1 wake-up signals and a first signaling according to one embodiment of the present application, as shown in FIG. 1. In FIG. 1, each block represents one step, and it is particularly emphasized that the order of the blocks in the figure does not limit the temporal relationship between the steps represented.

In Embodiment 1, a first node device in the present application receives the first information block in step 101; and the first node device in the present application monitors the W1 wake-up signals and determines whether to monitor in a first occasion the first signaling in step 102, W1 being a positive integer greater than 1, wherein the first information block is used for determining a configuration parameter value of at least one wake-up signal among the W1 wake-up signals, and an identifier of a first node is used for determining the first occasion; any one of the W1 wake-up signals carries at least one device group, and any one device group carried by any one of the W1 wake-up signals comprises at least one device; and the number of wake-up signals that carry device groups comprising the first node among the W1 wake-up signals is used for determining whether to monitor in the first occasion the first signaling.

As one embodiment, the first information block is transmitted via an air interface or a wireless interface.

As one embodiment, the first information block comprises all or part of one high-layer signaling or one physical layer signaling.

As one embodiment, the first information block comprises all or part of one RRC (Radio Resource Control) layer signaling, or the first information block comprises all or part of one MAC (Medium Access Control) layer signaling.

As one embodiment, the first information block comprises all or part of one system information block (SIB).

As one embodiment, the first information block comprises all or part of one SIB1.

As one embodiment, the first information block is user equipment- specific (UE-specific), or the first information block is cell-specific.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises all or part of IE (Information Element) "PCCH-Config"; or the first information block comprises all or part of IE "DownlinkConfigCommonSIB"; or the first information block comprises all or part of IE "WUS-Config-r19"; or the first information block comprises all or part in of IE "LPWUS-Config-r19"; or the first information block comprises all or part of IE "WUS-Config"; or the first information block comprises all or part of IE "LPWUS-Config".

As one embodiment, the first information block comprises all or part of paging configuration information.

As one embodiment, the first information block comprises all or part of downlink common configuration information.

As one embodiment, the first information block comprises all or part of wake-up signal configuration information.

As one embodiment, the technical feature "the first information block is used for determining a configuration parameter value of at least one wake-up signal among the W1 wake-up signals" comprises the following meaning: the first information block is used by the first node device in the present application for determining the configuration parameter value of at least one wake-up signal among the W1 wake-up signals.

As one embodiment, the technical feature "the first information block is used for determining a configuration parameter value of at least one wake-up signal among the W1 wake-up signals" comprises the following meaning: all or part of which is comprised in the first information block is used for explicitly or implicitly indicating the configuration parameter value of at least one wake-up signal among the W1 wake-up signals.

As one embodiment, the technical feature "the first information block is used for determining a configuration parameter value of at least one wake-up signal among the W1 wake-up signals" comprises the following meaning: all or part of which is comprised in the first information block is used for explicitly or implicitly indicating all or part of the configuration parameter value of at least one wake-up signal among the W1 wake-up signals.

As one embodiment, the technical feature "the first information block is used for determining a configuration parameter value of at least one wake-up signal among the W1 wake-up signals" comprises the following meaning: all or part of which is comprised in the first information block is used for explicitly or implicitly indicating all or part of the configuration parameter value of each of all or part of the W1 wake-up signals.

As one embodiment, the technical feature "the first information block is used for determining a configuration parameter value of at least one wake-up signal among the W1 wake-up signals" comprises the following meaning: all or part of which is comprised in the first information block is used for explicitly or implicitly indicating values of configuration parameters of part of wake-up signals among the W1 wake-up signals, and the values of configuration parameters of at least one wake-up signal among the W1 wake-up signals is defaulted.

As one embodiment, the technical feature "the first information block is used for determining a configuration parameter value of at least one wake-up signal among the W1 wake-up signals" comprises the following meaning: all or part of which is comprised in the first information block is used for explicitly or implicitly indicating values of part of configuration parameters of at least one wake-up signal among the W1 wake-up signals, and the values of at least one configuration parameter of at least one wake-up signal among the W1 wake-up signals is defaulted.

As one embodiment, the technical feature "the first information block is used for determining a configuration parameter value of at least one wake-up signal among the W1 wake-up signals" comprises the following meaning: the first information block is used for determining a set of configuration parameter values comprising at least one wake-up signal among the W1 wake-up signals.

As one embodiment, the technical feature "the first information block is used for determining a configuration parameter value of at least one wake-up signal among the W1 wake-up signals" comprises the following meaning: the first information block comprises W1 sub-information blocks, and the W1 sub-information blocks are used for determining configuration parameter values of the W1 wake-up signals, respectively. As one subsidiary embodiment of the above embodiment, any one of the W1 sub-information blocks is one IE. As one subsidiary embodiment of the above embodiment, any one of the W1 sub-information blocks is one field. As one subsidiary embodiment of the above embodiment, any one of the W1 sub-information blocks is one IE comprised in one list.

As one embodiment, the technical feature "the first information block is used for determining a configuration parameter value of at least one wake-up signal among the W1 wake-up signals" comprises the following meanings: the first information block comprises W2 sub-information blocks, and the W2 sub-information blocks are used for determining configuration parameter values of W2 wake-up signals in the W1 wake-up signals, respectively, W2 being a positive integer not greater than W1; and configuration parameter values of wake-up signals other than the W2 wake-up signals in the W1 wake-up signals are defaulted. As one subsidiary embodiment of the above embodiment, any one of the W2 sub-information blocks is one IE. As one subsidiary embodiment of the above embodiment, any one of the W2 sub-information blocks is one field. As one subsidiary embodiment of the above embodiment, any one of the W2 sub-information blocks is one IE comprised in one list.

As one embodiment, the technical feature "the first information block is used for determining a configuration parameter value of at least one wake-up signal among the W1 wake-up signals" comprises the following meanings: the first information block comprises one configuration parameter list, the configuration parameter list comprised in the first information block comprises W2 sub-information block, and the W2 sub-information blocks are used for determining configuration parameter values of W2 wake-up signals in the W1 wake-up signals, respectively, W2 being a positive integer not greater than W1. As one subsidiary embodiment of the above embodiment, any one of the W2 sub-information blocks is one IE. As one subsidiary embodiment of the above embodiment, any one of the W2 sub-information blocks is one field.

As one embodiment, W1 is equal to 2.

As one embodiment, W1 is equal to a positive integer power of 2.

As one embodiment, W1 is greater than 2.

As one embodiment, W1 is not greater than 8.

As one embodiment, any one of the W1 wake-up signals is a Low Power Wake-up Signal (LP-WUS).

As one embodiment, any one of the W1 wake-up signals is a square wave signal.

As one embodiment, any one of the W1 wake-up signals is a frequency modulation signal.

As one embodiment, any one of the W1 wake-up signals is a signal using OOK (On/Off Keying).

As one embodiment, any one of the W1 wake-up signals is a signal using FSK (Frequency Shift Keying).

As one embodiment, any one of the W1 wake-up signals is a signal using OOK and a constant envelop sequence.

As one embodiment, any one of the W1 wake-up signals is a signal using FSK and a constant envelop sequence.

As one embodiment, any one of the W1 wake-up signals is a signal for waking up a baseband processing function of a receiver.

As one embodiment, any one of the W1 wake-up signals is a signal for waking up a complete baseband processing function of a receiver.

As one embodiment, any one of the W1 wake-up signals is a signal for waking up the monitoring or reception of a PDCCH (Physical Downlink Control Channel).

As one embodiment, any one of the W1 wake-up signals is a baseband signal or a radio frequency signal.

As one embodiment, any one of the W1 wake-up signals is generated by OFDM.

As one embodiment, the W1 wake-up signals are used for reducing power consumption.

As one embodiment, the W1 wake-up signals are used in an RRC (Radio Resource Control) idle state or an RRC inactive state.

As one embodiment, the W1 wake-up signals may be used in an RRC (Radio Resource Control) idle state, an RRC inactive state and an RRC connected state.

As one embodiment, one bit block and a feature sequence are used together through OOK for generating one wake-up signal among the W1 wake-up signals.

As one embodiment, one bit block and the feature sequence are used together through FSK for generating one wake-up signal among the W1 wake-up signals.

As one embodiment, one bit block is subjected to at least one or more of OOK modulation, transform precoding, mapping to physical resources, OFDM baseband signal generation, and modulation and upconversion to generate one wake-up signal among the W1 wake-up signals.

As one embodiment, one bit block is subjected to at least one or more of FSK modulation, transform precoding, mapping to physical resources, OFDM baseband signal generation, and modulation and upconversion to generate one wake-up signal among the W1 wake-up signals.

As one embodiment, one bit block is subjected to at least one or more of OOK modulation, sequence generation/modulation, transform precoding, mapping to physical resources, OFDM baseband signal generation, and modulation and upconversion to generate one wake-up signal among the W1 wake-up signals.

As one embodiment, one bit block is subjected to at least one or more of FSK modulation, sequence generation/modulation, transform precoding, mapping to physical resources, OFDM baseband signal generation, and modulation and upconversion to generate one wake-up signal among the W1 wake-up signals.

As one embodiment, one bit block is subjected to at least one or more of oversampling or spreading/extension or repetition, transform precoding, mapping to physical resources, OFDM baseband signal generation, and modulation and upconversion to generate one wake-up signal among the W1 wake-up signals.

As one embodiment, one bit block is subjected to at least one or more of oversampling or spreading/extension or repetition, sequence generation/modulation, transform precoding, mapping to physical resources, OFDM baseband signal generation, and modulation and upconversion to generate one wake-up signal among the W1 wake-up signals.

As one embodiment, monitoring of the W1 wake-up signals is implemented at a radio frequency.

As one embodiment, the monitoring of the W1 wake-up signals is implemented at an intermediate frequency.

As one embodiment, the monitoring of the W1 wake-up signals is implemented at a baseband.

As one embodiment, the monitoring of the W1 wake-up signals is implemented by performing envelop detection on each of the W1 wake-up signals.

As one embodiment, the monitoring of the W1 wake-up signals is implemented by performing correlation on each of the W1 wake-up signals.

As one embodiment, the monitoring of the W1 wake-up signals is implemented by performing energy detection on each of the W1 wake-up signals.

As one embodiment, the monitoring of the W1 wake-up signals is implemented by performing envelop detection and decoding on each of the W1 wake-up signals.

As one embodiment, the monitoring of the W1 wake-up signals is implemented by performing envelop detection and correlation on each of the W1 wake-up signals.

As one embodiment, the monitoring of the W1 wake-up signals is implemented by performing frequency modulation (FM) to amplitude modulation (AM) conversion and envelop detection on each of the W1 wake-up signals.

As one embodiment, a monitoring method of the W1 wake-up signals is implementation-related.

As one embodiment, a receiver used for monitoring the W1 wake-up signals is implementation-related.

As one embodiment, the monitoring of the W1 wake-up signals is related to a capability of the first node device.

As one embodiment, each of the W1 wake-up signals has only one configuration parameter.

As one embodiment, each of the W1 wake-up signals has a plurality of configuration parameters.

As one embodiment, one wake-up signal among the W1 wake-up signals has only one configuration parameter, and one wake-up signal among the W1 wake-up signals has a plurality of configuration parameters.

As one embodiment, any one configuration parameter value of at least one wake-up signal among the W1 wake-up signals is a value of one field in one IE.

As one embodiment, any one configuration parameter value of at least one wake-up signal among the W1 wake-up signals is a value of one field in an IE used for configuring wake-up signals.

As one embodiment, a value of one configuration parameter of at least one wake-up signal among the W1 wake-up signals is a value of one field in an IE used for configuring wake-up signals.

As one embodiment, one configuration parameter value of at least one wake-up signal among the W1 wake-up signals is a value of one field comprised in the first information block.

As one embodiment, any one configuration parameter value of any one of the W1 wake-up signals is a value of one field comprised in the first information block.

As one embodiment, one configuration parameter value of one wake-up signal among the W1 wake-up signals is a parameter value used for configuring frequency domain resources.

As one embodiment, one configuration parameter value of one wake-up signal among the W1 wake-up signals is a parameter value used for configuring time domain resources.

As one embodiment, one configuration parameter value of one wake-up signal among the W1 wake-up signals is a parameter value used for configuring sequence resources used.

As one embodiment, one configuration parameter value of one wake-up signal among the W1 wake-up signals is a parameter value used for configuring the number of all or part of information bits carried.

As one embodiment, one configuration parameter value of one wake-up signal among the W1 wake-up signals is a parameter value used for configuring the number of bits comprised in at least one field carried.

As one embodiment, one configuration parameter value of one wake-up signal among the W1 wake-up signals is a parameter value used for configuring the number of bits comprised in all or part of fields carried.

As one embodiment, one configuration parameter value of one wake-up signal among the W1 wake-up signals is a parameter value used for configuring a format used.

As one embodiment, one configuration parameter value of one wake-up signal among the W1 wake-up signals is a parameter value used for configuring whether the wake-up signal is used for indicating the monitoring of a PEI (Paging Early Indication).

As one embodiment, one configuration parameter value of one wake-up signal among the W1 wake-up signals is a parameter value used for configuring whether the wake-up signal is used for indicating the monitoring of a PDCCH of a PS-RNTI scrambled CRC.

As one embodiment, one configuration parameter value of one wake-up signal among the W1 wake-up signals is a parameter value used for configuring a wake-up signal generation method.

As one embodiment, one configuration parameter value of one wake-up signal among the W1 wake-up signals is a parameter value used for configuring a type of the wake-up signal.

As one embodiment, one configuration parameter value of one wake-up signal among the W1 wake-up signals is a parameter value used for configuring a modulation method (OOK or FSK).

As one embodiment, time domain resources occupied respectively by any two of the W1 wake-up signals are orthogonal.

As one embodiment, time-frequency resources occupied respectively by any two of the W1 wake-up signals are orthogonal.

As one embodiment, time-frequency resources occupied respectively by any two of the W1 wake-up signals are different.

As one embodiment, there exist two wake-up signals among the W1 wake-up signals that occupy the same time-frequency resources.

As one embodiment, there exist two wake-up signals among the W1 wake-up signals that occupy the same time-frequency resources but carry different sequences.

As one embodiment, any two of the W1 wake-up signals are subjected to time division multiplexing (TDM).

As one embodiment, there exist two wake-up signals among the W1 wake-up signals that are subjected to code division multiplexing (CDM).

As one embodiment, there exist two wake-up signals among the W1 wake-up signals that are subjected to space division multiplexing (SDM).

As one embodiment, the first occasion is a paging occasion (PO).

As one embodiment, the first occasion is a paging occasion associated with the first node device in the present application.

As one embodiment, the first occasion is a paging occasion associated with user equipment other than the first node device in the present application.

As one embodiment, the first occasion is a paging occasion associated with at least a piece of user equipment comprising the first node device in the present application.

As one embodiment, the first occasion is not a paging occasion associated with the first node device in the present application.

As one embodiment, the first occasion is a PEI occasion.

As one embodiment, the first occasion is a PS (Power Saving) PDCCH monitoring occasion.

As one embodiment, the first occasion is a PDCCH monitoring occasion of a PS-RNTI scrambled CRC.

As one embodiment, the first occasion is a PEI occasion associated with the first node device in the present application.

As one embodiment, the first occasion is a PEI occasion associated with at least a piece of user equipment comprising the first node device in the present application.

As one embodiment, the first occasion comprises at least one PDCCH monitoring occasion.

As one embodiment, the first occasion comprises a plurality of slots that may send paging DCI.

As one embodiment, the first occasion is a paging frame (PF).

As one embodiment, the first signaling is a PDCCH.

As one embodiment, the first signaling is a paging PDCCH.

As one embodiment, the first signaling comprises all or part of fields in a paging DCI format.

As one embodiment, the first signaling is a PDCCH of a P-RNTI scrambled CRC.

As one embodiment, the first signaling is a PDCCH of a PEI-RNTI scrambled CRC.

As one embodiment, the first signaling is a PDCCH of a PS-RNTI scrambled CRC.

As one embodiment, the first signaling comprises all or part of fields in a DCI format 1_0.

As one embodiment, the first signaling comprises all or part of fields in a DCI format 2_6.

As one embodiment, the first signaling comprises all or part of fields in a DCI format 2_7.

As one embodiment, the first signaling carries high-layer information.

As one embodiment, the first signaling carries physical layer information.

As one embodiment, the first signaling carries core network information.

As one embodiment, the two expressions of "monitoring the first signaling" and "receiving information carried by the first signaling" are equivalent or may be used interchangeably.

As one embodiment, the two expressions of "monitoring the first signaling" and "decoding the first signaling" are equivalent or may be used interchangeably.

As one embodiment, the two expressions of "monitoring the first signaling" and "blindly decoding the first signaling" are equivalent or may be used interchangeably.

As one embodiment, the two expressions of "monitoring the first signaling" and "performing decoding and CRC on the first signaling" are equivalent or may be used interchangeably.

As one embodiment, the two expressions of "monitoring the first signaling" and "performing decoding and RNTI (Radio Network Temporary Identity)-scrambled CRC on the first signaling" are equivalent or may be used interchangeably.

As one embodiment, the two expressions of "monitoring the first signaling" and "decoding the first signaling for one or more DCI (Downlink Control Information) format(s)" are equivalent or may be used interchangeably.

As one embodiment, the two expressions of "monitoring the first signaling" and "decoding the first signaling for one or more DCI payload sizes" are equivalent or may be used interchangeably.

As one embodiment, the W1 wake-up signals are all associated with the first occasion.

As one embodiment, the W1 wake-up signals are all used for the first occasion.

As one embodiment, the W1 wake-up signals are all used for waking up the monitoring in the first occasion.

As one embodiment, a time-frequency position of any one of the W1 wake-up signals is related to the first occasion.

As one embodiment, the first occasion is used for determining the time-frequency position of at least one wake-up signal among the W1 wake-up signals.

As one embodiment, the W1 wake-up signals are all configured for the first occasion.

As one embodiment, the W1 wake-up signals correspond to the first occasion together.

As one embodiment, the W1 wake-up signals are used together for determining whether to monitor in the first occasion the first signaling.

As one embodiment, the first information block is used for determining a time domain position relationship between the time domain resources occupied by the W1 wake-up signals and the first occasion.

As one embodiment, information blocks other than the first information block are used for determining the time domain position relationship between the time domain resources occupied by at least one wake-up signal among the W1 wake-up signals and the first occasion.

As one embodiment, the first information block is used for determining a time domain offset between the time domain resources occupied by at least one wake-up signal among the W1 wake-up signals and a frame (or sub-frame or slot) to which the first occasion belongs (or is associated).

As one embodiment, the first node device is a monitor of the W1 wake-up signals.

As one embodiment, the first node device is one of a plurality of monitors of the W1 wake-up signals.

As one embodiment, "a monitor of the W1 wake-up signals" and "the first node device" are equivalent or may be used interchangeably.

As one embodiment, the identifier of the first node device is a TMSI.

As one embodiment, the identifier of the first node device is a 5G-S-TMSI.

As one embodiment, the identifier of the first node device is an RNTI.

As one embodiment, the identifier of the first node device is one ID assigned to the first node device.

As one embodiment, the identifier of the first node device is an IMSI (International Mobile Subscriber Identity).

As one embodiment, the technical feature "the identifier of the first node device is used for determining the first occasion" comprises the following meaning: the identifier of the first node device is used by the first node device for determining the first occasion.

As one embodiment, the technical feature "the identifier of the first node device is used for determining the first occasion" comprises the following meaning: the identifier of the first node device is used for determining the first occasion according to a predefined operation rule.

As one embodiment, the technical feature "the identifier of the first node device is used for determining the first occasion" comprises the following meaning: the identifier of the first node device is used for determining the paging occasion (PO) associated with the first occasion.

As one embodiment, the technical feature "the identifier of the first node device is used for determining the first occasion" comprises the following meaning: the identifier of the first node device is used for determining the paging frame (PF) associated with the first occasion.

As one embodiment, the technical feature "the identifier of the first node device is used for determining the first occasion" comprises the following meaning: the identifier of the first node device is used for determining the paging occasion (PO) associated with the first occasion, and the paging occasion associated with the first occasion and a configurable or predefined time domain offset are used together for determining the first occasion.

As one embodiment, the technical feature "the identifier of the first node device is used for determining the first occasion" comprises satisfying the following relationship:

$$(SFN + PF\_offset) \bmod T = (T \operatorname{div} N)*(UE\_ID \bmod N)$$

wherein SFN represents a PF comprising the first occasion or the starting point of the first occasion, UE_ID represents an identifier of the first node device, T represents a DRX cycle, N represents the number of PFs in the DRX cycle, and PF_offset represents a predefined or configured offset value.

As one embodiment, the technical feature "the identifier of the first node device is used for determining the first occasion" comprises satisfying the following relationship:

$$i\_s = \operatorname{floor}(UE\_ID/N) \bmod Ns$$

wherein i_s represents an index of the first occasion, UE_ID represents the identifier of the first node device, N represents the number of PFs in the DRX cycle, and Ns is the number of POs for one PF.

As one embodiment, the technical feature "the identifier of the first node device is used for determining the first occasion" comprises the following meaning: the first occasion is a PDCCH monitoring occasion, and the identifier of the first node device is used for determining an index and/or type of a search space set to which the first occasion belongs.

As one embodiment, the technical feature "any one of the W1 wake-up signals carries at least one device group" comprises the following meaning: any one of the W1 wake-up signals carries the identifier (or index) of at least one device group.

As one embodiment, the technical feature "any one of the W1 wake-up signals carries at least one device group" comprises the following meaning: information bits carried by any one of the W1 wake-up signals comprise bits indicating the identifier (or index) of at least one device group.

As one embodiment, the technical feature "any one of the W1 wake-up signals carries at least one device group" comprises the following meaning: bits used for generating any one of the W1 wake-up signals comprise bits used for indicating the identifier (or index) of at least one device group.

As one embodiment, the technical feature "any one of the W1 wake-up signals carries at least one device group" comprises the following meaning: any one of the W1 wake-up signals is used for explicitly or implicitly indicating at least one device group.

As one embodiment, the technical feature "any one of the W1 wake-up signals carries at least one device group" comprises the following meaning: any one of the W1 wake-up signals is used for waking up a device in at least one device group.

As one embodiment, any one of the W1 wake-up signals carries only one device group.

As one embodiment, any one of the W1 wake-up signals carries a plurality of device groups.

As one embodiment, one wake-up signal among the W1 wake-up signals carries only one device group and another wake-up signal among the W1 wake-up signals carries a plurality of device groups.

As one embodiment, the maximum number of device groups that any one of the W1 wake-up signals can carry is predefined or fixed or configurable or related to the capability of the first node device.

As one embodiment, the maximum number of device groups that any one of the W1 wake-up signals can carry is equal to a positive integer power of 2.

As one embodiment, the maximum number of device groups that any one of the W1 wake-up signals can carry is equal to 8.

As one embodiment, any two of the W1 wake-up signals carry different device groups, respectively.

As one embodiment, any two of the W1 wake-up signals carry different sets of device groups.

As one embodiment, there exist two wake-up signals among the W1 wake-up signals that carry the exactly same device groups, respectively.

As one embodiment, any two of the W1 wake-up signals carry the same set of device groups.

As one embodiment, the number of device groups carried respectively by any two of the W1 wake-up signals is equal.

As one embodiment, there exist two wake-up signals among the W1 wake-up signals that carry unequal numbers of device groups, respectively.

As one embodiment, the first node device in the present application assumes or expects that sets of device groups carried respectively by any two of the W1 wake-up signals are the same.

As one embodiment, whether the sets of device groups carried by any two of the W1 wake-up signals are the same is configured by a signaling.

As one embodiment, the device groups carried by any two of the W1 wake-up signals are exactly the same.

As one embodiment, there exist two wake-up signals among the W1 wake-up signals that carry different sets of device groups, respectively.

As one embodiment, there exist two wake-up signals among the W1 wake-up signals that support hopping or altering of device groups.

As one embodiment, any one device group carried by one wake-up signal among the W1 wake-up signals is also carried by another wake-up signal.

As one embodiment, there exists one wake-up signal among the W1 wake-up signals that carry a set of device groups being a subset of a set of device groups carried by another wake-up signal.

As one embodiment, the device groups carried respectively by the W1 wake-up signals conform to a nested structure.

As one embodiment, any one device group carried by any one of the W1 wake-up signals comprises only one device.

As one embodiment, any one device group carried by any one of the W1 wake-up signals comprises a plurality of devices.

As one embodiment, one device group carried by one wake-up signal among the W1 wake-up signals comprises only one device, and one device group carried by one wake-up signal among the W1 wake-up signals comprises a plurality of devices.

As one embodiment, the maximum number of devices comprised in any one device group carried by any one of the W1 wake-up signals is predefined or fixed or configurable or related to the capability of the first node device.

As one embodiment, the number of devices comprised in any one device group carried by any one of the W1 wake-up signals is configurable or predefined.

As one embodiment, any one device comprised in any one device group carried by any one of the W1 wake-up signals is user equipment (UE) or a terminal.

As one embodiment, any one device comprised in any one device group carried by any one of the W1 wake-up signals is user equipment (UE) or a terminal that supports the wake-up signal.

As one embodiment, one device comprised in one device group carried by one wake-up signal among the W1 wake-up signals is user equipment (UE) or a terminal that supports the wake-up signal, and one device comprised in one device group carried by one wake-up signal among the W1 wake-up signals is user equipment (UE) or a terminal that does not support the wake-up signal (either traditional or before version 19).

As one embodiment, the number of wake-up signals that carry device groups comprising the first node device among the W1 wake-up signals is the number of wake-up signals that carry the index (or identifier) of device groups comprising the first node device among the W1 wake-up signals.

As one embodiment, the number of wake-up signals that carry device groups comprising the first node device among the W1 wake-up signals is the number of wake-up signals that carry the index (or identifier) of device groups that is assigned to the first node device among the W1 wake-up signals.

As one embodiment, the number of wake-up signals that carry device groups comprising the first node device among the W1 wake-up signals is the number of wake-up signals that carry the index (or identifier) of device groups associated with the first node device among the W1 wake-up signals.

As one embodiment, the W1 wake-up signals comprise only W3 wake-up signals that carry device groups comprising the first node device, W3 being a non-negative integer not greater than W1, and the number of wake-up signals that carry device groups comprising the first node device among the W1 wake-up signals is equal to W3.

As one embodiment, the W1 wake-up signals comprise only the W3 wake-up signals that carry the index (or identifier) of device groups comprising the first node device, W3 being a non-negative integer not greater than W1, and the number of wake-up signals that carry device groups comprising the first node device among the W1 wake-up signals is equal to W3.

As one embodiment, the W1 wake-up signals comprise only the W3 wake-up signals detected to carry device groups comprising the first node device, W3 being a non-negative integer not greater than W1, and the number of wake-up signals that carry device groups comprising the first node device among the W1 wake-up signals is equal to W3.

As one embodiment, at least one device group carried by any one of the W3 wake-up signals comprises the first node device, any one of the W3 wake-up signals is one of the W1 wake-up signals, W3 being a non-negative integer not greater than W1, and the number of wake-up signals that carry device groups comprising the first node device among the W1 wake-up signals is equal to W3.

As one embodiment, any one of the W3 wake-up signals carries at least one device group comprising the first node device, any one of the W3 wake-up signals is one of the W1 wake-up signals, any one device group carried by any one wake-up signal other than the W3 wake-up signals among the W1 wake-up signals does not comprise the first node device, W3 being a non-negative integer not greater than W1, and the number of wake-up signals that carry device groups comprising the first node device among the W1 wake-up signals is equal to W3.

As one embodiment, the number of wake-up signals that carry device groups comprising the first node device among the W1 wake-up signals is equal to the total number of wake-up signals that carry device groups comprising the first node device among the W1 wake-up signals.

As one embodiment, the number of wake-up signals that carry device groups comprising the first node device among the W1 wake-up signals is the total number of wake-up signals that carry device groups comprising the first node device among the W1 wake-up signals.

As one embodiment, the number of wake-up signals that carry device groups comprising the first node device among the W1 wake-up signals is the total number of all wake-up signals that carry device groups comprising the first node device among the W1 wake-up signals.

As one embodiment, the number of wake-up signals that carry device groups comprising the first node device among the W1 wake-up signals is the total number of detected wake-up signals that carry device groups comprising the first node device among the W1 wake-up signals.

As one embodiment, one wake-up signal that is not detected by the first node device is regarded as the wake-up signal that does not carry device groups comprising the first node device.

As one embodiment, one wake-up signal that is not detected by the first node device is not counted into the number of wake-up signals that carry device groups comprising the first node device among the W1 wake-up signals.

As one embodiment, when none of the W1 wake-up signals are detected, the number of wake-up signals that carry device groups comprising the first node device among the W1 wake-up signals is equal to 0.

As one embodiment, when any one detected wake-up signal among the W1 wake-up signals does not carry device groups comprising the first node device, the number of wake-up signals that carry device groups comprising the first node device among the W1 wake-up signals is equal to 0.

As one embodiment, the number of wake-up signals that carry device groups comprising the first node device among the W1 wake-up signals may be equal to 0 or greater than 0.

As one embodiment, "the number of wake-up signals that carry device groups comprising the first node device among the W1 wake-up signals is equal to 0" and "any one of the W1 wake-up signals does not carry device groups comprising the first node device" are equivalent or may be used interchangeably.

As one embodiment, "the number of wake-up signals that carry device groups comprising the first node device among the W1 wake-up signals is equal to 0" and "none of the W1 wake-up signals are detected" are equivalent or may be used interchangeably.

As one embodiment, "the number of wake-up signals that carry device groups comprising the first node device among the W1 wake-up signals is equal to 0" and "any one detected wake-up signal among the W1 wake-up signals does not carry device groups comprising the first node device" are equivalent or may be used interchangeably.

As one embodiment, "the number of wake-up signals that carry device groups comprising the first node device among the W1 wake-up signals is equal to 0" and "none of the W1 wake-up signals are detected or any one detected wake-up signal among the W1 wake-up signals does not carry device groups comprising the first node device" are equivalent or may be used interchangeably.

As one embodiment, the number of wake-up signals that carry device groups comprising the first node device among the W1 wake-up signals is not greater than W1.

As one embodiment, the technical feature "the number of wake-up signals that carry device groups comprising the first node device among the W1 wake-up signals is used for determining whether to monitor in the first occasion the first signaling" comprises the following meaning: the number of wake-up signals that carry device groups comprising the first node device among the W1 wake-up signals is used by the first node device in the present application for determining whether to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meaning: the number of wake-up signals that carry device groups comprising the first node device among the W1 wake-up signals is used by the first node device for determining whether it is required to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: the number of wake-up signals that carry device groups comprising the first node device among the W1 wake-up signals is used for determining whether to monitor a second signaling in the present application, and the second signaling is used for determining whether to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: the number of wake-up signals that carry device groups comprising the first node device among the W1 wake-up signals is used for determining whether to monitor a PEI, and the PEI is used for determining whether to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meaning: whether the number of wake-up signals that carry device groups comprising the first node device among the W1 wake-up signals is equal to W1 is used for determining whether to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meaning: whether the number of wake-up signals that carry device groups comprising the first node device among the W1 wake-up signals is greater than 0 is used for determining whether to monitor in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: whether the number of wake-up signals that carry device groups comprising the first node device among the W1 wake-up signals is greater than or equal to a characteristic threshold is used for determining whether to monitor in the first occasion the first signaling, the characteristic threshold is a non-negative integer not greater than W1, and the characteristic threshold is configurable or predefined or fixed or related to the capability of the first node device.

As one embodiment, the technical feature "the number of wake-up signals that carry device groups comprising the first node device among the W1 wake-up signals is used for determining whether to monitor in the first occasion the first signaling" comprises the following meanings: when at least one wake-up signal among the W1 wake-up signals is detected and carries device groups comprising the first node device, the first node device monitors in the first occasion the first signaling; otherwise, the first node device abandons monitoring in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when none of the W1 wake-up signals are detected or any one detected wake-up signal among the W1 wake-up signals does not carry device groups comprising the first node device, the first node device abandons monitoring in the first occasion the first signaling; otherwise, the first node device monitors in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when at least one wake-up signal among the W1 wake-up signals is detected and carries device groups comprising the first node device, the first node device monitors the PEI, and the PEI monitored by the first node device is used for determining whether to monitor in the first occasion the first signaling; otherwise, the first node device abandons monitoring in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when the W1 wake-up signals are all detected and each of the W1 wake-up signals carries at least one device group comprising the first node device, the first node device monitors in the first occasion the first signaling; otherwise, the first node device abandons monitoring in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when the W1 wake-up signals are all detected and each of the W1 wake-up signals carries at least one device group comprising the first node device, the first node device monitors the PEI, and the PEI monitored by the first node device is used for determining whether to monitor in the first occasion the first signaling; otherwise, the first node device abandons monitoring in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when there exists one wake-up signal among the W1 wake-up signals that is not detected or there exists one wake-up signal among the W1 wake-up signals that does not carry any device group comprising the first node device, the first node device abandons monitoring in the first occasion the first signaling; otherwise, the first node device monitors in the first occasion the first signaling.

As one embodiment, the technical feature "the number of wake-up signals that carry device groups comprising the first node device among the W1 wake-up signals is used for determining whether to monitor in the first occasion the first signaling" comprises the following meanings: when the number of detected wake-up signals that carry device groups comprising the first node device among the W1 wake-up signals is greater than or equal to the characteristic threshold, the first node device monitors in the first occasion the first signaling; otherwise, the first node device abandons monitoring in the first occasion the first signaling; and the characteristic threshold is a non-negative integer not greater than W1, and the characteristic threshold is configurable or predefined or fixed or related to the capability of the first node device.

As one embodiment, the technical feature "the number of wake-up signals that carry device groups comprising the first node device among the W1 wake-up signals is used for determining whether to monitor in the first occasion the first signaling" comprises the following meanings: when the number of detected wake-up signals that carry device groups comprising the first node device among the W1 wake-up signals is greater than or equal to the characteristic threshold, the first node device monitors the PEI, and the PEI monitored by the first node device is used for determining whether to monitor in the first occasion the first signaling; otherwise, the first node device abandons monitoring in the first occasion the first signaling; and the characteristic threshold is a non-negative integer not greater than W1, and the characteristic threshold is configurable or predefined or fixed or related to the capability of the first node device.

As one embodiment, the technical feature "the number of wake-up signals that carry device groups comprising the first node device among the W1 wake-up signals is used for determining whether to monitor in the first occasion the first signaling" comprises the following meanings: when none of the W1 wake-up signals are detected or the number of wake-up signals that carry device groups comprising the first node device among the W1 wake-up signals is less than the characteristic threshold, the first node device abandons monitoring in the first occasion the first signaling; otherwise, the first node device monitors in the first occasion the first signaling; and the characteristic threshold is a non-negative integer not greater than W1, and the characteristic threshold is configurable or predefined or fixed or related to the capability of the first node device.

As one embodiment, the first information block is used for determining the number of wake-up signals associated with the first occasion.

As one embodiment, the first information block is used for determining the number of occasions associated with the W1 wake-up signals.

As one embodiment, information blocks other than the first information block are used for determining the number of wake-up signals associated with the first occasion.

As one embodiment, information blocks other than the first information block are used for determining the number of occasions associated with the W1 wake-up signals.

## Embodiment 2

Embodiment 2 illustrates a schematic diagram of a network architecture according to the present application, as shown in FIG. 2. FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as 5GS (5G System)/EPS (Evolved Packet System) 200 or some other suitable terminologies. The 5GS/EPS 200 may comprise a piece or a plurality of pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in figures, the 5GS/EPS provides packet switching services, however, those skilled in the art will readily appreciate that the various concepts presented throughout the present application may be extended to networks providing circuit switching services or other cellular networks. The NG-RAN comprises an NR/Evolved Node B (gNB/eNB) 203 and other gNBs (eNBs) 204. The gNB (eNB) 203 provides user and control plane protocol termination towards the UE201. The gNB (eNB) 203 may be connected to other gNBs (eNBs) 204 via an Xn/X2 interface (e.g., backhaul). The gNB (eNB) 203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB (eNB) 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB (eNB) 203 is connected to 5GC/EPC210 via an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node device in the present application.

As one embodiment, the gNB (eNB) 201 corresponds to a second node device in the present application.

**Embodiment 3**

Embodiment 3 shows a schematic diagram of one embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture of the control plane 300 for a first node device (UE or a gNB) and a second node device (a gNB or UE) using three layers: Layer 1, Layer 2, and Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for the link between the first node device and the second node device through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second node device. The PDCP sublayer 304 provides multiplexing between different radio bearers and logical channels. The PDCP sublayer 304 also provides security by encrypting data packets, and provides handover support on the first node device between the second node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., IP layer) terminating at the P-GW on the network side and an application layer terminating at the other end (e.g., remote UE and a server, etc.) of the connection.

As one embodiment, the radio protocol architecture in FIG. 3 is applicable to the first node device in the present application.

As one embodiment, the radio protocol architecture in FIG. 3 is applicable to the second node device in the present application.

**Embodiment 4**

Embodiment 4 shows a schematic diagram of a first node device and a second node device according to one embodiment of the present application, as shown in FIG. 4.

The first node device (450) may comprise a controller/processor 490, a data source/cache 480, a receiving processor 452, a transmitting device/receiving device 456, and a transmitting processor 455, the transmitting device/receiving device 456 comprising an antenna 460.

The second node device (410) may comprise a controller/processor 440, a data source/cache 430, a receiving processor 412, a transmitting device/receiving device 416, and a transmitting processor 415, the transmitting device/receiving device 416 comprising an antenna 420.

In a DL (Downlink), an upper layer packet, such as high-layer information comprised in a first information block in the present application and high-layer information comprised in a first signaling (if the first signaling comprises high-layer information), is provided to the controller/processor 440. The controller/processor 440 implements the functions of an L2 layer and above. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for HARQ operations, retransmission of lost packets, and signalings to the first node device 450, for example, the high-layer information comprised in the first information block in the present application and the high-layer information comprised in the first signaling (if the first signaling comprises high-layer information) are generated in the controller/processor 440. The transmitting processor 415 implements various signal processing functions for an L1 layer (i.e., a physical layer), comprising coding, interleaving, scrambling, modulation, power control/assignment, precoding, physical layer control signaling generation, etc., for example, the generation of a physical layer signal carrying the first information block in the present application, a physical layer signal of W1 wake-up signals, and a physical layer signal corresponding to the first signaling is completed in the transmitting processor 415. Generated modulation symbols are divided into parallel streams and each stream is mapped to a corresponding multi-carrier subcarrier and/or multi-carrier symbol, and then mapped by the transmitting processor 415 to the antenna 420 via the transmitting device 416 for transmission in the form of a radio frequency signal. At a receiving end, each receiving device 456 receives the radio frequency signal through its corresponding antenna 460. Each receiving device 456 recovers baseband information modulated onto a radio frequency carrier and provides the baseband information to the receiving processor 452. The receiving processor 452 implements various signal receiving processing functions of the L1 layer. The signal receiving processing functions comprise monitoring the physical layer signal carrying the first information block in the present application, the W1 wake-up signals and the first signaling, demodulating multi-carrier symbols in a multi-carrier symbol stream based on various modulation solutions (e.g., binary phase shift keying (BPSK), quadrature phase shift keying (QPSK)), then descrambling, decoding and deinterleaving to recover data or control transmitted by the second node device 410 on a physical channel, and then providing data and control signals to the controller/processor 490. The controller/processor 490 is responsible for the L2 layer and above, and the controller/processor 490 interprets the high-layer information comprised in the first information block in the present application and the high-layer information comprised in the first signaling (if the first signaling comprises high-layer information). The controller/processor may be associated with a memory 480 which stores program codes and data. The memory 480 may be referred to as a computer-readable medium.

In an uplink (UL) transmission, similar to the downlink transmission, the high-layer information comprises high-layer information comprised in a second information block in the present application that is generated by the controller/processor 490 and is then implemented by the transmitting processor 455 for various signal transmitting processing functions for the L1 layer (i.e., the physical layer), comprising that the generation of a physical layer signal carrying the second information block is completed at the transmitting processor 455, and is then mapped by the transmitting processor 455 to the antenna 460 via the transmitting device 456 for transmission in the form of a radio frequency signal. The receiving device 416 receives the radio frequency signal through its corresponding antenna 420. Each receiving device 416 recovers baseband information modulated onto the radio frequency carrier and provides the baseband information to the receiving processor 412. The receiving processor 412 implements various signal receiving processing functions for the L1 layer (i.e., the physical layer), comprising receiving processing of the physical layer signal carrying the second information block and subsequent provision of the data and/or control signals to the controller/processor 440. The controller/processor 440 implements the functions of the L2 layer that comprise interpreting the high-layer information, comprising interpreting high-layer information carried by the second information block. The controller/processor may be associated with the cache 430 that stores program codes and data. The cache 430 may be a computer-readable medium.

As one embodiment, the first node device 450 apparatus comprises: at least one processor and at least one memory, the at least one memory comprising a computer program code; and the at least one memory and the computer program code being configured to be used together with the at least one processor; and the first node device 450 apparatus at least: receives the first information block; and monitors the W1 wake-up signals and determines whether to monitor in a first occasion the first signaling, W1 being a positive integer greater than 1, wherein the first information block is used for determining a configuration parameter value of at least one wake-up signal among the W1 wake-up signals, and an identifier of a first node is used for determining the first occasion; any one of the W1 wake-up signals carries at least one device group, and any one device group carried by any one of the W1 wake-up signals comprises at least one device; and the number of wake-up signals that carry device groups comprising the first node among the W1 wake-up signals is used for determining whether to monitor in the first occasion the first signaling.

As one embodiment, the first node device 450 apparatus comprises: a memory storing a computer-readable instruction program, the computer-readable instruction program generating actions when executed by at least one processor, the actions comprising: receiving the first information block; monitoring the W1 wake-up signals and determining whether to monitor in the first occasion the first signaling, W1 being a positive integer greater than 1, wherein the first information block is used for determining the configuration parameter value of at least one wake-up signal among the W1 wake-up signals, and the identifier of the first node is used for determining the first occasion; any one of the W1 wake-up signals carries at least one device group, and any one device group carried by any one of the W1 wake-up signals comprises at least one device; and the number of wake-up signals that carry device groups comprising the first node among the W1 wake-up signals is used for determining whether to monitor in the first occasion the first signaling.

As one embodiment, the second node device 410 apparatus comprises: at least one processor and at least one memory, the at least one memory comprising a computer program code; and the at least one memory and the computer program code being configured to be used together with the at least one processor. The second node device 410 apparatus at least: sends the first information block; sends the W1 wake-up signals and sends in the first occasion the first signaling, W1 being a positive integer greater than 1, wherein the first information block is used for determining the configuration parameter value of at least one wake-up signal among the W1 wake-up signals, and the identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

As one embodiment, the second node device 410 comprises: a memory storing a computer-readable instruction program, the computer-readable instruction program generating actions when executed by at least one processor, the actions comprising: sending the first information block; sending the W1 wake-up signals and sending in the first occasion the first signaling, W1 being a positive integer greater than 1, wherein the first information block is used for determining the configuration parameter value of at least one wake-up signal among the W1 wake-up signals, and the identifier of the monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

As one embodiment, the first node device 450 is a piece of user equipment (UE).

As one embodiment, the second node device 410 is one base station device (gNB/eNB).

As one embodiment, the receiving device 456 (comprising the antenna 460), the receiving processor 452 and the controller/processor 490 are used for receiving the first information block in the present application.

As one embodiment, the receiving device 456 (comprising the antenna 460) is used for monitoring the W1 wake-up signals in the present application.

As one embodiment, the receiving device 456 (comprising the antenna 460), the receiving processor 452 and the controller/processor 490 are used for monitoring the first signaling in the present application.

As one embodiment, the transmitting device 456 (comprising the antenna 460), the transmitting processor 455 and the controller/processor 490 are used for sending the second information block in the present application.

As one embodiment, the transmitting device 416 (comprising the antenna 420), the transmitting processor 415 and the controller/processor 440 are used for sending the first information block in the present application.

As one embodiment, the transmitting device 416 (comprising the antenna 420) is used for sending the W1 wake-up signals.

As one embodiment, the transmitting device 416 (comprising the antenna 420), the transmitting processor 415 and the controller/processor 440 are used for sending the first signaling in the present application.

As one embodiment, the receiving device 416 (comprising the antenna 420), the receiving processor 412 and the controller/processor 440 are used for receiving the second information block in the present application.

**Embodiment 5**

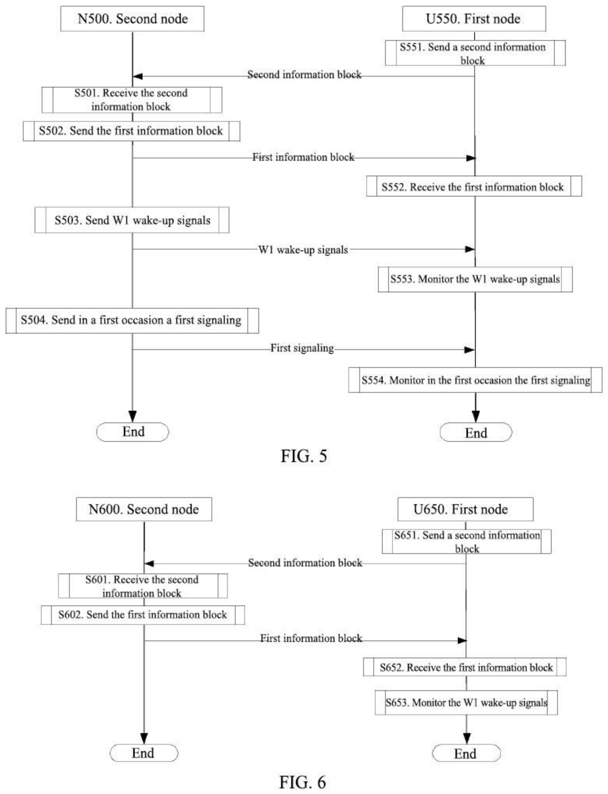

Embodiment 5 illustrates a flowchart of radio signal transmission according to one embodiment of the present application, as shown in FIG. 5. In FIG. 5, a second node device N500 is a maintenance base station of a serving cell of a first node device U550. It is particularly noted that the order in this example does not limit the signal transmission order and implementation order in the present application.

For **the second node device N500,** a second information block is received in step S501, a first information block is sent in step S502, W1 wake-up signals are sent in step S503, and a first signaling is sent in a first occasion in step S504.

For **the first node device U550,** the second information block is sent in step S551, the first information block is received in step S552, the W1 wake-up signals are monitored in step S553, and the first signaling is monitored in the first occasion in step S554.

In Embodiment 5, W1 is a positive integer greater than 1; the first information block is used for determining a configuration parameter value of at least one wake-up signal among the W1 wake-up signals, and an identifier of a first node is used for determining the first occasion; any one of the W1 wake-up signals carries at least one device group, and any one device group carried by any one of the W1 wake-up signals comprises at least one device; the number of wake-up signals that carry device groups comprising the first node among the W1 wake-up signals is used for determining whether to monitor in the first occasion the first signaling; and the second information block is used for indicating at least one band, and a first node device supports reception of wake-up signals on each band indicated by the second information block.

As one embodiment, the second information block is used for indicating a capability of the first node device.

As one embodiment, the second information block is transmitted via an air interface or a wireless interface.

As one embodiment, the second information block is also delivered via an X2 interface, an Xn interface, or an NG interface.

As one embodiment, the second information block is also delivered between network nodes.

As one embodiment, the second information block is also delivered to another network node or delivered to a core network after received by a network node via an RAN interface.

As one embodiment, the second information block is also delivered to another network node or delivered to the core network after received by the network node via a Uu interface.

As one embodiment, the second information block comprises all or part of a high-layer signaling or a physical layer signaling.

As one embodiment, the second information block is earlier than the first information block.

As one embodiment, the second information block is later than the first information block.

As one embodiment, the second information block comprises all or part of an RRC signaling, or the second information block comprises all or part of an MAC layer signaling.

As one embodiment, the second information block is transmitted via a PUSCH or a PUCCH (Physical Uplink Control Channel).

As one embodiment, the second information block is per user equipment (per UE), or the second information block is per feature set, or the second information block is per band, or the second information block is per band combination, or the second information block is per band list, or the second information block is per frequency range, or the second information block is per duplex mode.

As one embodiment, the second information block is related to the frequency range.

As one embodiment, the second information block is related to the duplex mode (TDD or FDD).

As one embodiment, the second information block comprises all or part of "UE-RadioPagingInfo".

As one embodiment, the second information block comprises all or part of "UERadioPagingInformation".

As one embodiment, the second information block comprises all or part of "UE-NR-Capability-v1900".

As one embodiment, the second information block comprises all or part of "LPWUS-Parameters-v1900".

As one embodiment, the second information block comprises all or part of "lpwus-SubgroupingSupportBandList-r19".

As one embodiment, the second information block is used for indicating the UE capability required for a paging.

As one embodiment, the technical feature "the second information block is used for indicating at least one band" comprises the following meaning: all or part of which is comprised in the second information block is used by the first node device in the present application for explicitly or implicitly indicating at least one band.

As one embodiment, the technical feature "the second information block is used for indicating at least one band" comprises the following meaning: all or part of which is comprised in the second information block is used by a second node device in the present application for explicitly or implicitly indicating at least one band.

As one embodiment, the technical feature "the second information block is used for indicating at least one band" comprises the following meaning: all or part of which is comprised in the second information block is used by the first node device in the present application for explicitly or implicitly indicating at least one band to the second node device in the present application.

As one embodiment, the technical feature "the second information block is used for indicating at least one band" comprises the following meaning: all or part of which is comprised in the second information block is used by the second node device in the present application for explicitly or implicitly indicating at least one band to another network node or core network.

As one embodiment, the technical feature "the second information block is used for indicating at least one band" comprises the following meaning: all or part of which is comprised in the second information block is used by the second node device in the present application for explicitly or implicitly indicating at least one band to another network node or core network.

As one embodiment, the technical feature "the second information block is used for indicating at least one band" comprises the following meaning: the second information block is used for indicating one band list.

As one embodiment, the technical feature "the second information block is used for indicating at least one band" comprises the following meaning: the second information block is used for indicating a band that supports monitoring (or reception) of wake-up signals.

As one embodiment, the number of bands indicated by the second information block is not greater than 1024.

As one embodiment, the second information block is also used for indicating a receiver parameter value supported by the first node device.

As one embodiment, the second information block is also used for indicating a receiver type supported by the first node device.

As one embodiment, the second information block is also used for indicating a reception parameter value of wake-up signals supported by the first node device.

As one embodiment, the second information block is also used for indicating at least one configuration parameter value of wake-up signals supported by the first node device.

As one embodiment, the technical feature "the first node device supports reception of wake-up signals on each band indicated by the second information block" comprises the following meaning: the first node device has a capability to monitor (or receive) wake-up signals on each band indicated by the second information block.

As one embodiment, the technical feature "the first node device supports reception of wake-up signals on each band indicated by the second information block" comprises the following meaning: the first node device supports reception of a signal or an indication used for paging wake-up on each band indicated by the second information block.

As one embodiment, the technical feature "the first node device supports reception of wake-up signals on each band indicated by the second information block" comprises the following meaning: the first node device supports reception of a signal or an indication used for DRX wake-up on each band indicated by the second information block.

As one embodiment, the technical feature "the first node device supports reception of wake-up signals on each band indicated by the second information block" comprises the following meaning: the first node device supports wake-up for a paging on each band indicated by the second information block.

As one embodiment, the technical feature "the first node device supports reception of wake-up signals on each band indicated by the second information block" comprises the following meaning: the first node device supports an advance indication of a paging on each band indicated by the second information block.

As one embodiment, the first node device supports reception of wake-up signals having one or more given configuration parameter values on each band indicated by the second information block.

As one embodiment, the first node device supports reception of wake-up signals on each band indicated by the second information block and supports a given wake-up signal receiver type.

As one embodiment, the first node device supports reception of wake-up signals on each band indicated by the second information block and supports a given wake-up signal receiver capability.

As one embodiment, the first node device supports reception of wake-up signals on each band indicated by the second information block and supports a given wake-up signal receiver parameter value.

As one embodiment, the second information block is also used for indicating that the first node device supports a plurality of configuration sets for the wake-up signals.

As one embodiment, the second information block is also used for indicating that the first node device supports grouping (or subgrouping) of user equipment.

As one embodiment, the first node device supports one or any combination of {reception (or monitoring) of wake-up signals, reception (or monitoring) of wake-up signals having one or more given configuration parameter values, grouping (or subgrouping) of user equipment, and supporting of a plurality of configuration sets for the wake-up signals} on each band indicated by the second information block.

## Embodiment 6

Embodiment 6 illustrates another flowchart of radio signal transmission according to one embodiment of the present application, as shown in FIG. 6. In FIG. 6, a second node device N600 is a maintenance base station of a serving cell of a first node device U650. It is particularly noted that the order in this example does not limit the signal transmission order and implementation order in the present application.

For **the second node device N600,** a second information block is received in step S601, and a first information block is sent in step S602.

For **the first node device U650,** the second information block is sent in step S651, the first information block is received in step S652, and W1 wake-up signals are monitored in step S653.

In Embodiment 6, W1 is a positive integer greater than 1; the first information block is used for determining a configuration parameter value of at least one wake-up signal among the W1 wake-up signals, and an identifier of a first node is used for determining a first occasion; any one of the W1 wake-up signals carries at least one device group, and any one device group carried by any one of the W1 wake-up signals comprises at least one device; the number of wake-up signals that carry device groups comprising the first node among the W1 wake-up signals is used for determining whether to monitor in the first occasion a first signaling; and the second information block is used for indicating at least one band, and a first node device supports reception of wake-up signals on each band indicated by the second information block.

## Embodiment 7

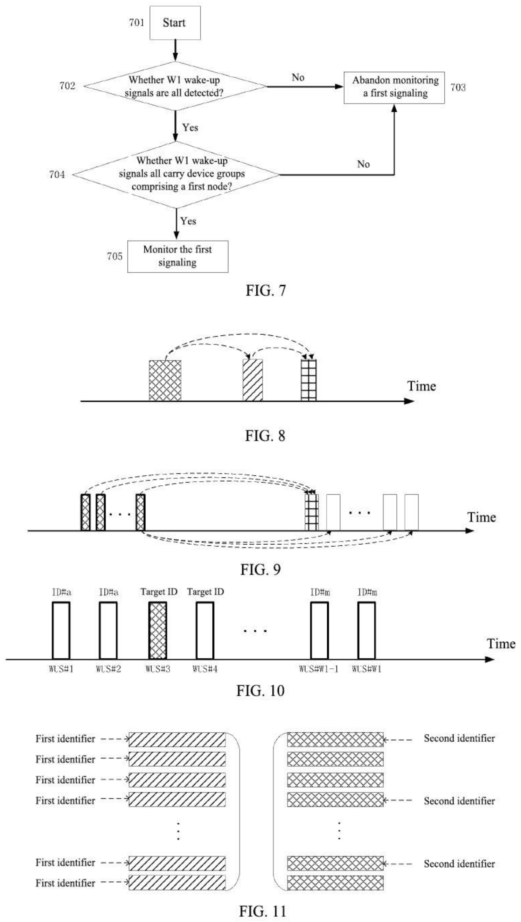

Embodiment 7 illustrates a schematic diagram of a relationship between W1 wake-up signals and a first signaling according to one embodiment of the present application, as shown in FIG. 7. In FIG. 7, each rectangle represents an operation, and each diamond represents a judgment. Starting from step 701, it is judged in step 702 whether the W1 wake-up signals are all detected, and monitoring of the first signaling is abandoned in step 703, it is judged in step 704 whether the W1 wake-up signals all carry device groups comprising a first node, and the first signaling is monitored in step 705; it should be particularly noted that the sequence number of the steps is only used as a step identifier in one example, and does not limit the execution order between the various steps.

In Embodiment 7, when there exists one wake-up signal among the W1 wake-up signals that is not detected or there exists one wake-up signal among the W1 wake-up signals that does not carry any device group comprising a first node device in the present application, the first node device abandons monitoring in a first occasion in the present application the first signaling in the present application; otherwise, the first node device monitors in the first occasion the first signaling.

As one embodiment, wake-up is performed only when the W1 wake-up signals are all detected and carry the first node, thereby further reducing the probability of false wake-up and further saving power consumption.

As one embodiment, "one wake-up signal is detected" means that information carried by this wake-up signal is correctly received.

As one embodiment, "one wake-up signal is detected" means that information bits carried by this wake-up signal are correctly decoded.

As one embodiment, "one wake-up signal is detected" means that an energy detection for this wake-up signal exceeds one configured or predefined threshold.

As one embodiment, "one wake-up signal is detected" means that a power value of an envelop detection of this wake-up signal exceeds one configured or predefined threshold.

As one embodiment, "one wake-up signal is detected" means that a correlation peak of a correlation detection of this wake-up signal exceeds one configured or predefined threshold.

As one embodiment, "one wake-up signal is detected" means that a CRC of bits carried by this wake-up signal is passed.

As one embodiment, "one wake-up signal is not detected" means that no wake-up signal is detected on time-frequency resources assigned to this wake-up signal.

As one embodiment, "one wake-up signal is not detected" means that no wake-up signal is detected on time-frequency resources and sequence resources assigned to this wake-up signal.

As one embodiment, "one wake-up signal is not detected" means that the information carried by this wake-up signal is not correctly decoded.

As one embodiment, "one wake-up signal is not detected" means that the energy detection on resources assigned to this wake-up signal does not exceed one configured or predefined threshold.

As one embodiment, "one wake-up signal is not detected" means that the power value of the envelop detection for this wake-up signal does not exceed one configured or predefined threshold.

As one embodiment, "one wake-up signal is not detected" means that the correlation peak of the correlation detection of the wake-up signal does not exceed one configured or predefined threshold.

As one embodiment, "one wake-up signal is not detected" means that the CRC of the bits carried by this wake-up signal fails.

As one embodiment, a criterion for judging whether one wake-up signal is detected is implementation-related.

As one embodiment, the criterion for judging whether one wake-up signal is detected does not need to be defined by a standard protocol.

As one embodiment, whether one wake-up signal is detected is implementation-related.

As one embodiment, whether one wake-up signal is detected is implementation-related when corresponding requirements are satisfied.

As one embodiment, whether one wake-up signal is detected is implementation-related. The detection of this wake-up signal satisfies at least one of the corresponding three requirements of miss detection probability/rate, false detection probability/rate, and false alarm probability/rate.

As one embodiment, the technical feature "there exists one wake-up signal among the W1 wake-up signals that is not detected or there exists one wake-up signal among the W1 wake-up signals that does not carry any device group comprising the first node device" comprises the following meaning: there exists one wake-up signal among the W1 wake-up signals that is not detected or there exists one detected wake-up signal among the W1 wake-up signals that does not carry any device group comprising the first node device.

As one embodiment, the technical feature "there exists one wake-up signal among the W1 wake-up signals that is not detected or there exists one wake-up signal among the W1 wake-up signals that does not carry any device group comprising the first node device" comprises the following meaning: the total number of wake-up signals that carry device groups comprising the first node device among the W1 wake-up signals is less than W1.

As one embodiment, the technical feature "there exists one wake-up signal among the W1 wake-up signals that is not detected or there exists one wake-up signal among the W1 wake-up signals that does not carry any device group comprising the first node device" comprises the following meaning: at least one wake-up signal among the W1 wake-up signals is not detected or there exists one wake-up signal among the W1 wake-up signals that is detected but does not carry any device group comprising the first node device.

As one embodiment, the technical feature "there exists one wake-up signal among the W1 wake-up signals that is not detected or there exists one wake-up signal among the W1 wake-up signals that does not carry any device group comprising the first node device" comprises the following meaning: at least one wake-up signal among the W1 wake-up signals is not detected or there exists one wake-up signal among the W1 wake-up signals that is detected but carries only a device group comprising devices other than the first node device.

As one embodiment, the technical feature "there exists one wake-up signal among the W1 wake-up signals that is not detected or there exists one wake-up signal among the W1 wake-up signals that does not carry any device group comprising the first node device" comprises the following meaning: there exists one wake-up signal among the W1 wake-up signals that is not detected.

As one embodiment, the technical feature "there exists one wake-up signal among the W1 wake-up signals that is not detected or there exists one wake-up signal among the W1 wake-up signals that does not carry any device group comprising the first node device" comprises the following meaning: there exists one wake-up signal among the W1 wake-up signals that does not carry any device group comprising the first node device.

As one embodiment, the technical feature "there exists one wake-up signal among the W1 wake-up signals that is not detected or there exists one wake-up signal among the W1 wake-up signals that does not carry any device group comprising the first node device" comprises the following meaning: there exists one wake-up signal among the W1 wake-up signals that is not detected and there exists one detected wake-up signal among the W1 wake-up signals that does not carry any device group comprising the first node device.

As one embodiment, the technical feature "there exists one wake-up signal among the W1 wake-up signals that is not detected or there exists one wake-up signal among the W1 wake-up signals that does not carry any device group comprising the first node device" comprises the following meaning: none of the W1 wake-up signals are detected.

As one embodiment, the technical feature "the first node device abandons monitoring in the first occasion the first signaling" comprises the following meaning: the first node device is not required to monitor in the first occasion the first signaling.

As one embodiment, the technical feature "the first node device abandons monitoring in the first occasion the first signaling" comprises the following meaning: the first node device does not monitor in the first occasion the first signaling.

As one embodiment, the technical feature "the first node device abandons monitoring in the first occasion the first signaling" comprises the following meaning: the first node device is allowed not to monitor in the first occasion the first signaling.

As one embodiment, the technical feature "the first node device abandons monitoring in the first occasion the first signaling" comprises the following meaning: the first node device itself decides whether to monitor in the first occasion the first signaling.

As one embodiment, the technical feature "the first node device abandons monitoring in the first occasion the first signaling" comprises the following meaning: the first node device may not monitor in the first occasion the first signaling.

As one embodiment, the technical feature "the first node device abandons monitoring in the first occasion the first signaling" comprises the following meaning: whether the first node device monitors in the first occasion the first signaling is implementation-related.

As one embodiment, the technical feature "the first node device abandons monitoring in the first occasion the first signaling" comprises the following meaning: the standard protocol does not limit the first node device to necessarily monitor in the first occasion the first signaling.

## Embodiment 8

Embodiment 8 illustrates a schematic diagram of a relationship between a second signaling and a first signaling according to one embodiment of the present application, as shown in FIG. 8. In FIG. 8, the horizontal axis represents time, the rectangle filled with cross lines represents one wake-up signal among W1 wake-up signals, the rectangle filled with diagonal lines represents the second signaling, the rectangle filled with cross lines represents the first signaling, and the dotted line with an arrow represents a relationship for determining whether to monitor.

In Embodiment 8, the second signaling in the present application is used for indicating whether to monitor in a first occasion in the present application the first signaling in the present application; and the number of wake-up signals that carry device groups comprising a first node device in the present application among the W1 wake-up signals is used for determining whether to monitor the second signaling.

As one embodiment, whether to monitor the second signaling is determined by at least one of a wake-up signal indication or a device group relationship, so that the monitoring of a PEI may be flexibly configured, thereby ensuring backward compatibility and reducing the false alarm probability of wake-up.

As one embodiment, the second signaling is a PDCCH.

As one embodiment, the second signaling is the PDCCH used for paging advance indication.

As one embodiment, the second signaling comprises all or part of fields in one DCI format.

As one embodiment, the second signaling is the PDCCH of a PEI-RNTI scrambled CRC.

As one embodiment, the second signaling is the PDCCH of a PS-RNTI scrambled CRC.

As one embodiment, the second signaling comprises all or part of the fields in a DCI format 2_6.

As one embodiment, the second signaling comprises all or part of the fields in a DCI format 2_7.

As one embodiment, the second signaling is carried by a PDSCH (Physical Downlink Shared Channel).

As one embodiment, the second signaling carries high-layer information.

As one embodiment, the second signaling carries physical layer information.

As one embodiment, the second signaling carries core network information.

As one embodiment, the two expressions of "monitoring the second signaling" and "receiving information carried by the second signaling" are equivalent or may be used interchangeably.

As one embodiment, the two expressions of "monitoring the second signaling" and "decoding the second signaling" are equivalent or may be used interchangeably.

As one embodiment, the two expressions of "monitoring the second signaling" and "blindly decoding the second signaling" are equivalent or may be used interchangeably.

As one embodiment, the two expressions of "monitoring the second signaling" and "performing decoding and CRC on the second signaling" are equivalent or may be used interchangeably.

As one embodiment, the two expressions of "monitoring the second signaling" and "performing decoding and RNTI (Radio Network Temporary Identity) scrambled CRC on the second signaling" are equivalent or may be used interchangeably.

As one embodiment, the two expressions of "monitoring the second signaling" and "decoding the second signaling for one or more DCI (Downlink Control Information) formats" are equivalent or may be used interchangeably.

As one embodiment, the two expressions "monitor the second signaling" and "decoding the second signaling for one or more DCI payload sizes" are equivalent or may be used interchangeably.

As one embodiment, the technical feature "the second signaling is used for indicating whether to monitor in the first occasion the first signaling" comprises the following meaning: the second signaling is used by the network node for indicating whether the first node device in the present application monitors in the first occasion the first signaling.

As one embodiment, the technical feature "the second signaling is used for indicating whether to monitor in the first occasion the first signaling" comprises the following meaning: the second signaling is used by a second node device in the present application for indicating whether to monitor in the first occasion the first signaling.

As one embodiment, the technical feature "the second signaling is used for indicating whether to monitor in the first occasion the first signaling" comprises the following meaning: the second signaling is used by the core network for indicating whether to monitor in the first occasion the first signaling.

As one embodiment, the technical feature "the second signaling is used for indicating whether to monitor in the first occasion the first signaling" comprises the following meaning: when the second signaling is monitored, the second signaling is used for indicating whether to monitor in the first occasion the first signaling.

As one embodiment, the technical feature "the second signaling is used for indicating whether to monitor in the first occasion the first signaling" comprises the following meaning: when the second signaling is detected, the second signaling is used for indicating whether to monitor in the first occasion the first signaling.

As one embodiment, the technical feature "the second signaling is used for indicating whether to monitor in the first occasion the first signaling" comprises the following meaning: when the second signaling is monitored and detected, the second signaling is used for indicating whether to monitor in the first occasion the first signaling.

As one embodiment, the technical feature "the second signaling is used for indicating whether to monitor in the first occasion the first signaling" comprises the following meaning: when the second signaling is monitored and detected, the second signaling is used for indicating whether to monitor in the first occasion the first signaling; otherwise, the wake-up signal is used for determining whether to monitor in the first occasion the first signaling.

As one embodiment, the technical feature "the second signaling is used for indicating whether to monitor in the first occasion the first signaling" comprises the following meanings: the second signaling is used for indicating at least one device group, and whether the first node device belongs to the one device group indicated by the second signaling is used for determining whether to monitor in the first occasion the first signaling.

As one embodiment, the technical feature "the second signaling is used for indicating whether to monitor in the first occasion the first signaling" comprises the following meanings: the second signaling is used for indicating at least one device group, and whether the first node devices belongs to the one device group indicated by the second signaling and device groups carried by at least one wake-up signal among the W1 wake-up signals simultaneously is used for determining whether to monitor in the first occasion the first signaling.

As one embodiment, the technical feature "the second signaling is used for indicating whether to monitor in the first occasion the first signaling" comprises the following meanings: the second signaling is used for indicating at least one device group, and whether the first node device belongs to the one device group indicated by the second signaling, and whether the W1 wake-up signals are all detected and carry device groups comprising the first node device are used for determining whether to monitor in the first occasion the first signaling.

As one embodiment, the technical feature "the second signaling is used for indicating whether to monitor in the first occasion the first signaling" comprises the following meanings: the second signaling is used for indicating at least one device group; and when the first node device belongs to the one device group indicated by the second signaling, the first node device monitors in the first occasion the first signaling; otherwise, the first node device is not required to monitor in the first occasion the first signaling.

As one embodiment, the technical feature "the second signaling is used for indicating whether to monitor in the first occasion the first signaling" comprises the following meanings: the second signaling is used for indicating at least one device group; and when the first node device belongs to the one device group indicated by the second signaling and the W1 wake-up signals are all detected and carry device groups comprising the first node device, the first node device monitors in the first occasion the first signaling; otherwise, the first node device is not required to monitor in the first occasion the first signaling.

As one embodiment, when the second signaling is monitored, the second signaling is used for indicating whether to monitor in the first occasion the first signaling.

As one embodiment, when the second signaling is monitored and detected, the second signaling is used for indicating whether to monitor in the first occasion the first signaling.

As one embodiment, "monitoring in the first occasion the first signaling" and "the first node device is required to monitor in the first occasion the first signaling" are equivalent or may be used interchangeably.

As one embodiment, "monitoring in the first occasion the first signaling" and "the first node device expects the first signaling to be sent in the first occasion" are equivalent or may be used interchangeably.

As one embodiment, "not monitoring in the first occasion the first signaling" and "the first node device is not required to monitor in the first occasion the first signaling" are equivalent or may be used interchangeably.

As one embodiment, "not monitoring in the first occasion the first signaling" and "the first node device does not expect the first signaling to be sent in the first occasion" are equivalent or may be used interchangeably.

As one embodiment, "monitoring the second signaling" and "the first node device is required to monitor the second signaling" are equivalent or may be used interchangeably.

As one embodiment, "monitoring the second signaling" and "the first node device expects the second signaling to be sent" are equivalent or may be used interchangeably.

As one embodiment, "not monitoring the second signaling" and "the first node device is not required to monitor the second signaling" are equivalent or may be used interchangeably.

As one embodiment, "not monitoring the second signaling" and "the first node device does not expect the second signaling to be sent" are equivalent or may be used interchangeably.

As one embodiment, the technical feature "the number of wake-up signals that carry device groups comprising the first node device among the W1 wake-up signals is used for determining whether to monitor the second signaling" comprises the following meaning: the number of wake-up signals that carry device groups comprising the first node device among the W1 wake-up signals is used by the first node device in the present application for determining whether to monitor the second signaling.

As one embodiment, the technical feature "the number of wake-up signals that carry device groups comprising the first node device among the W1 wake-up signals is used for determining whether to monitor the second signaling" comprises the following meaning: the number of wake-up signals that carry device groups comprising the first node device among the W1 wake-up signals is used for determining whether monitoring of the second signaling is required.

As one embodiment, the technical feature "the number of wake-up signals that carry device groups comprising the first node device among the W1 wake-up signals is used for determining whether to monitor the second signaling" comprises the following meaning: whether the number of wake-up signals that carry device groups comprising the first node device among the W1 wake-up signals is equal to W1 is used for determining whether to monitor the second signaling.

As one embodiment, the technical feature "the number of wake-up signals that carry device groups comprising the first node device among the W1 wake-up signals is used for determining whether to monitor the second signaling" comprises the following meaning: whether the number of wake-up signals that carry device groups comprising the first node device among the W1 wake-up signals is greater than 0 is used for determining whether to monitor the second signaling.

As one embodiment, the technical feature "the number of wake-up signals that carry device groups comprising the first node device among the W1 wake-up signals is used for determining whether to monitor the second signaling" comprises the following meanings: whether the number of wake-up signals that carry device groups comprising the first node device among the W1 wake-up signals is greater than or equal to a characteristic threshold is used for determining whether to monitor the second signaling, wherein the characteristic threshold is a non-negative integer not greater than W1, and the characteristic threshold is configurable or predefined or fixed or related to a capability of the first node device.

As one embodiment, when the capability of the first node device supports monitoring the second signaling and a first information block enables/switches on monitoring of the second signaling, the number of wake-up signals that carry device groups comprising the first node device among the W1 wake-up signals is used for determining whether to monitor the second signaling; otherwise, the first node device is not required to monitor the second signaling.

As one embodiment, when the capability of the first node device supports monitoring the second signaling, the number of wake-up signals that carry device groups comprising the first node device among the W1 wake-up signals is used for determining whether to monitor the second signaling; otherwise, the first node device is not required to monitor the second signaling.

As one embodiment, the capability of the first node device is also used for determining whether to monitor the second signaling.

As one embodiment, the first information block is also used for determining whether to monitor the second signaling.

As one embodiment, at least one information bit carried by at least one wake-up signal among the W1 wake-up signals is used for indicating whether to monitor the second signaling.

## Embodiment 9

Embodiment 9 illustrates a schematic diagram of a relationship between W1 wake-up signals and a first occasion according to one embodiment of the present application, as shown in FIG. 9. In FIG. 9, the horizontal axis represents time, each thick-line rectangle filled with diagonal lines represents one wake-up signal among the W1 wake-up signals, each thin-line rectangle filled with cross lines represents the first occasion, and each unfilled rectangle represents an occasion other than the first occasion that is associated with the W1 wake-up signals.

In Embodiment 9, a first information block in the present application is used for determining the number of wake-up signals associated with the first occasion in the present application, and the first information block is used for determining the number of occasions associated with the W1 wake-up signals.

As one embodiment, the number of wake-up signals corresponding to per occasion and the number of occasions corresponding to the wake-up signals are configured respectively, which improves the flexibility of the use of the wake-up signals and supports the optimization configuration of the power consumption during resource occupation.

As one embodiment, any one wake-up signal associated with the first occasion is a wake-up signal used for determining whether to monitor in the first occasion a first signaling.

As one embodiment, any one wake-up signal associated with the first occasion is a signal used for waking up monitoring of the first signaling in the first occasion.

As one embodiment, any one wake-up signal associated with the first occasion is a wake-up signal used for the first occasion.

As one embodiment, any one wake-up signal associated with the first occasion is a wake-up signal of which a time-frequency position is related to the first occasion.

As one embodiment, any one wake-up signal associated with the first occasion is a wake-up signal of which the time-frequency position is determined according to the first occasion.

As one embodiment, the first occasion is used for determining the time-frequency position of any one wake-up signal associated with the first occasion.

As one embodiment, any one wake-up signal associated with the first occasion is a wake-up signal configured for the first occasion.

As one embodiment, any one wake-up signal associated with the first occasion is a wake-up signal corresponding to the first occasion.

As one embodiment, the first information block is used for determining a time domain position relationship between any one wake-up signal associated with the first occasion and the first occasion.

As one embodiment, information blocks other than the first information block are used for determining the time domain position relationship between any one wake-up signal associated with the first occasion and the first occasion.

As one embodiment, the first information block is used for determining a time domain offset between time domain resources occupied by one wake-up signal associated with the first occasion and a frame (or sub-frame or slot) to which the first occasion belongs (or is associated).

As one embodiment, the number of wake-up signals associated with the first occasion may be equal to 1 or greater than 1.

As one embodiment, the number of wake-up signals associated with the first occasion may be equal to 0.

As one embodiment, the number of wake-up signals associated with the first occasion is not greater than W1.

As one embodiment, the number of wake-up signals associated with the first occasion is the number of wake-up signals associated with per occasion.

As one embodiment, the maximum value of the number of wake-up signals associated with the first occasion is equal to 2.

As one embodiment, the maximum value of the number of wake-up signals associated with the first occasion is greater than 2.

As one embodiment, the maximum value of the number of wake-up signals associated with the first occasion is predefined or fixed or configurable or related to a capability of a first node device.

As one embodiment, "the number of wake-up signals associated with the first occasion is equal to 0" and "the first information block does not configure any wake-up signal for the first occasion" are equivalent or may be used interchangeably.

As one embodiment, the technical feature "the first information block is used for determining the number of wake-up signals associated with the first occasion" comprises the following meaning: the first information block is used by the first node device in the present application for determining the number of wake-up signals associated with the first occasion.

As one embodiment, the technical feature "the first information block is used for determining the number of wake-up signals associated with the first occasion" comprises the following meaning: all or part of which is comprised in the first information block is used for explicitly or implicitly indicating the number of wake-up signals associated with the first occasion.

As one embodiment, the technical feature "the first information block is used for determining the number of wake-up signals associated with the first occasion" comprises the following meaning: all or part of which is comprised in the first information block is used for explicitly or implicitly indicating the number of wake-up signals associated with per occasion, and the number of wake-up signals associated with the first occasion is equal to the number of wake-up signals associated with per occasion.

As one embodiment, the technical feature "the first information block is used for determining the number of wake-up signals associated with the first occasion" comprises the following meaning: all or part of which is comprised in the first information block is used for explicitly or implicitly indicating W1.

As one embodiment, the technical feature "the first information block is used for determining the number of wake-up signals associated with the first occasion" comprises the following meaning: all or part of which is comprised in the first information block are used for explicitly or implicitly indicating the number of wake-up signals associated with the first occasion among the W1 wake-up signals.

As one embodiment, any one occasion associated with the W1 wake-up signals is an occasion associated with at least one wake-up signal among the W1 wake-up signals.

As one embodiment, any one occasion associated with the W1 wake-up signals is an occasion associated with each of the W1 wake-up signals.

As one embodiment, any one occasion associated with the W1 wake-up signals is an occasion at which at least one wake-up signal among the W1 wake-up signals can be used for wake-up.

As one embodiment, any one occasion associated with the W1 wake-up signals is an occasion at which at least one wake-up signal among the W1 wake-up signals can be used for determining whether to monitor a PDCCH.

As one embodiment, any one occasion associated with the W1 wake-up signals is an occasion with which at least one wake-up signal among the W1 wake-up signals is associated by a higher-layer signaling configuration.

As one embodiment, any one occasion associated with the W1 wake-up signals is an occasion to which at least one wake-up signal among the W1 wake-up signals is applied.

As one embodiment, any one occasion associated with the W1 wake-up signals is an occasion for which at least one wake-up signal among the W1 wake-up signals is for by the higher-layer signaling configuration.

As one embodiment, any one occasion associated with the W1 wake-up signals may actually be woken up by at least one wake-up signal among the W1 wake-up signals or may not actually be woken up by any one of the W1 wake-up signals.

As one embodiment, an association between one wake-up signal and one occasion is reciprocal.

As one embodiment, "one wake-up signal is associated with one occasion" and "one occasion is associated with one wake-up signal" are equivalent or may be used interchangeably.

As one embodiment, the number of occasions associated with the W1 wake-up signals may be equal to 1 or greater than 1.

As one embodiment, the maximum value of the number of occasions associated with the W1 wake-up signals is equal to 2.

As one embodiment, the maximum value of the number of occasions associated with the W1 wake-up signals is greater than 2.

As one embodiment, the number of occasions associated with the W1 wake-up signals may be equal to 0.

As one embodiment, the number of occasions associated with the W1 wake-up signals is greater than 0.

As one embodiment, the number of occasions associated with the W1 wake-up signals is the number of occasions associated with per wake-up signal.

As one embodiment, the number of occasions associated with the W1 wake-up signals is the number of occasions associated with per wake-up signal group.

As one embodiment, the maximum value of the number of occasions associated with the W1 wake-up signals is predefined or fixed or configurable or related to the capability of the first node device.

As one embodiment, the technical feature "the first information block is used for determining the number of occasions associated with the W1 wake-up signals" comprises the following meaning: the first information block is used by the first node device in the present application for determining the number of occasions associated with the W1 wake-up signals.

As one embodiment, the technical feature "the first information block is used for determining the number of occasions associated with the W1 wake-up signals" comprises the following meaning: all or part of which is comprised in the first information block is used for explicitly or implicitly indicating the number of occasions associated with the W1 wake-up signals.

As one embodiment, the technical feature "the first information block is used for determining the number of occasions associated with the W1 wake-up signals" comprises the following meaning: all or part of which is comprised in the first information block is used for explicitly or implicitly indicating the number of occasions associated with per signal, and the number of occasions associated with the W1 wake-up signals is equal to the number of occasions associated with the per signal.

As one embodiment, the technical feature "the first information block is used for determining the number of occasions associated with the W1 wake-up signals" comprises the following meaning: all or part of which is comprised the first information block is used for explicitly or implicitly indicating W4, W4 being a number greater than 0, and W4 and W1 are used together for determining the number of occasions associated with the W1 wake-up signals.

As one embodiment, the technical feature "the first information block is used for determining the number of occasions associated with the W1 wake-up signals" comprises the following meaning: all or part of which is comprised in the first information block is used for explicitly or implicitly indicating W4, W4 being a number greater than 0, and the number of occasions associated with the W1 wake-up signals is equal to a ratio of W1 to W4.

**Embodiment 10**

Embodiment 10 illustrates a schematic diagram of a relationship between a target identifier and a target wake-up signal according to one embodiment of the present application, as shown in FIG. 10. In FIG. 10, the horizontal axis represents time, each rectangle represents one of W1 wake-up signals, the rectangle filled with cross lines represents the target wake-up signal, and an identifier corresponding to the target wake-up signal is the target identifier.

In Embodiment 10, the target wake-up signal is one wake-up signal among the W1 wake-up signals in the present application, and the target identifier is an identifier of one device group to which a first node device in the present application belongs; a first number value is equal to the number of wake-up signals that carry device groups comprising the first node device among the W1 wake-up signals, whether the target wake-up signal is counted into the first number value is related to whether the target wake-up signal carries the target identifier, and the target identifier is related to a time-frequency position of the target wake-up signal.

As one embodiment, an identifier value is changed according to the position of the wake-up signal, thereby supporting the change or hopping of a device group between different wake-up signals, reducing the probability of false wake-up, and further saving power consumption.

As one embodiment, the target wake-up signal is any one of the W1 wake-up signals.

As one embodiment, the target wake-up signal is a given one wake-up signal among the W1 wake-up signals.

As one embodiment, the target wake-up signal is the earliest or latest wake-up signal among the W1 wake-up signals.

As one embodiment, the target wake-up signal carries only one device group.

As one embodiment, the target wake-up signal carries a plurality of device groups.

As one embodiment, the target identifier is an identifier of one device group that the target wake-up signal may carry.

As one embodiment, the target identifier is an identifier of a device group carried by the target wake-up signal to which the first node device belongs.

As one embodiment, the target identifier is an identifier of a device group comprising the first node device that the target wake-up signal may carry.

As one embodiment, the target identifier is an identifier of a device group carried by the target wake-up signal to which the first node device belongs.

As one embodiment, the target identifier is an identifier of a device group to which the first node device belongs for the target wake-up signal.

As one embodiment, the target identifier is an index of one device group to which the first node device belongs.

As one embodiment, the target identifier is an identifier of a first device group in the present application.

As one embodiment, the target identifier is an identifier of a device group other than the first device group in the present application.

As one embodiment, each of a plurality of device groups comprises the first node device, and the target identifier is an identifier of one of the plurality of device groups.

As one embodiment, the target identifier is explicitly or implicitly configured to each device in one device group to which the first node device belongs.

As one embodiment, the target identifier is explicitly or implicitly assigned to the first node device by a core network.

As one embodiment, the target identifier is explicitly or implicitly assigned to each device in one device group to which the first node device belongs by the core network.

As one embodiment, the target identifier is a non-negative integer.

As one embodiment, the target identifier is a positive integer.

As one embodiment, the first number value is a non-negative integer.

As one embodiment, the first number value is not greater than W1.

As one embodiment, the technical feature "whether the target wake-up signal carries the target identifier" means: whether the target wake-up signal carries a bit used for indicating the target identifier.

As one embodiment, the technical feature "whether the target wake-up signal carries the target identifier" means: whether the target identifier is used for generating the target wake-up signal.

As one embodiment, the technical feature "whether the target wake-up signal carries the target identifier" means: whether information bit carried by the target wake-up signal is used for explicitly or implicitly indicating the target identifier.

As one embodiment, the technical feature "whether the target wake-up signal carries the target identifier" means: whether a bit block used for generating the target wake-up signal contains the bit indicating the target identifier.

As one embodiment, the technical feature "whether the target wake-up signal carries the target identifier" means: whether the target wake-up signal is detected and whether the target wake-up signal carries the target identifier when the target wake-up signal is detected.

As one embodiment, the technical feature "whether the target wake-up signal is counted into the first number value" comprises the following meaning: whether the target wake-up signal is determined as a wake-up signal that carries device groups comprising the first node device.

As one embodiment, the technical feature "whether the target wake-up signal is counted into the first number value" comprises the following meaning: whether the target wake-up signal is regarded as a wake-up signal that carries device groups comprising the first node device.

As one embodiment, the technical feature "whether the target wake-up signal is counted into the first number value" comprises the following meaning: whether the target wake-up signal is counted as one wake-up signal counted by the first number value.

As one embodiment, the technical feature "whether the target wake-up signal is counted into the first number value" comprises the following meaning: wake-up signals counted into the first number value comprise the target wake-up signal.

As one embodiment, the technical feature "whether the target wake-up signal is counted into the first number value is related to whether the target wake-up signal carries the target identifier" comprises the following meaning: whether the target wake-up signal carries the target identifier is used for determining whether the target wake-up signal is counted into the first number value.

As one embodiment, the technical feature "whether the target wake-up signal is counted into the first number value is related to whether the target wake-up signal carries the target identifier" comprises the following meaning: when the target wake-up signal carries the target identifier, the target wake-up signal is counted into the first number value; otherwise, the target wake-up signal is not counted into the first number value.

As one embodiment, the technical feature "whether the target wake-up signal is counted into the first number value is related to whether the target wake-up signal carries the target identifier" comprises the following meaning: the count of the first number value is related to whether the target wake-up signal carries the target identifier.

As one embodiment, the technical feature "whether the target wake-up signal is counted into the first number value is related to whether the target wake-up signal carries the target identifier" comprises the following meaning: a size of the first number value differs depending on whether the target wake-up signal carries the target identifier.

As one embodiment, the technical feature "whether the target wake-up signal is counted into the first number value is related to whether the target wake-up signal carries the target identifier" comprises the following meaning: when the target wake-up signal is detected and carries the target identifier, the target wake-up signal is counted into the first number value; otherwise, the target wake-up signal is not counted into the first number value.

As one embodiment, the time-frequency position of the target wake-up signal comprises: an index or position of the target wake-up signal among the W1 wake-up signals.

As one embodiment, the time-frequency position of the target wake-up signal comprises: a time domain position of a paging occasion (PO) or PEI occasion associated with the target wake-up signal. As one subsidiary embodiment of the above embodiment, the time domain position of the paging occasion (PO) or PEI occasion associated with the target wake-up signal is an index of a DRX cycle to which the paging occasion or PEI occasion belongs or is associated. As one subsidiary embodiment of the above embodiment, the time domain position of the paging occasion (PO) or PEI occasion associated with the target wake-up signal is a frame number of a frame to which the paging occasion or PEI occasion belongs or is associated.

As one embodiment, the time-frequency position of the target wake-up signal comprises: the time domain position of a time window to which all or part of time domain resources occupied by the target wake-up signal belong. As one subsidiary embodiment of the above embodiment, the time window to which all or part of the time domain resources occupied by the target wake-up signal belong is one frame, and the time domain position of the time window to which all or part of the time domain resources occupied by the target wake-up signal belong is the frame number. As one subsidiary embodiment of the above embodiment, the time window to which all or part of the time domain resources occupied by the target wake-up signal belong is one sub-frame, and the time domain position of the time window to which all or part of the time domain resources occupied by the target wake-up signal belong is a sub-frame number. As one subsidiary embodiment of the above embodiment, the time window to which all or part of the time domain resources occupied by the target wake-up signal belong is one slot, and the time domain position of the time window to which all or part of the time domain resources occupied by the target wake-up signal belong is an index of the slot. As one subsidiary embodiment of the above embodiment, the time window to which all or part of the time domain resources occupied by the target wake-up signal belong is one DRX cycle, and the time domain position of the time window to which all or part of the time domain resources occupied by the target wake-up signal belong is an index of the DRX cycle.

As one embodiment, the time-frequency position of the target wake-up signal comprises: the time domain position of a paging frame corresponding to the target wake-up signal.

As one embodiment, the time-frequency position of the target wake-up signal comprises: the time domain position of the DRX cycle corresponding to the target wake-up signal.

As one embodiment, the time-frequency position of the target wake-up signal comprises: an index of one RB (Resource Block) occupied by the target wake-up signal in a frequency domain.

As one embodiment, the time-frequency position of the target wake-up signal comprises: an index of an RB with the highest frequency or the lowest frequency occupied by the target wake-up signal in the frequency domain.

As one embodiment, the time-frequency position of the target wake-up signal comprises: an index of the RB with the maximum index or the minimum index occupied by the target wake-up signal in the frequency domain.

As one embodiment, the technical feature "the target identifier is related to a time-frequency position of the target wake-up signal" comprises the following meaning: the time-frequency position of the target wake-up signal is used for determining the target identifier.

As one embodiment, the technical feature "the target identifier is related to a time-frequency position of the target wake-up signal" comprises the following meaning: the target identifier changes with the time-frequency position of the target wake-up signal.

As one embodiment, the technical feature "the target identifier is related to a time-frequency position of the target wake-up signal" comprises the following meaning: the target identifier is one of P1 identifiers, and the P1 identifiers correspond to P1 candidate positions, respectively, P1 being a positive integer greater than 1; the time-frequency position of the target wake-up signal is one of the P1 candidate positions, and the target identifier is an identifier among the P1 identifiers that corresponds to the time-frequency position of the target wake-up signal. As one subsidiary embodiment of the above embodiment, the P1 identifiers are assigned by the core network to the first node device. As one subsidiary embodiment of the above embodiment, the P1 identifiers are configured by a signaling or predefined. As one subsidiary embodiment of the above embodiment, the P1 candidate positions are assigned by the core network to the first node device. As one subsidiary embodiment of the above embodiment, the P1 candidate positions are configured by the signaling or predefined. As one subsidiary embodiment of the above embodiment, a corresponding relationship between the P1 identifiers and the P1 candidate positions is configured by the core network. As one subsidiary embodiment of the above embodiment, the corresponding relationship between the P1 identifiers and the P1 candidate positions is predefined or configurable.

As one embodiment, the technical feature "the target identifier is related to a time-frequency position of the target wake-up signal" comprises the following meaning: the target identifier is one of the P1 identifiers, P1 being a positive integer greater than 1; the time-frequency position of the target wake-up signal is used for determining the target identifier from the P1 identifiers. As one subsidiary embodiment of the above embodiment, the P1 identifiers are assigned by the core network to the first node device. As one subsidiary embodiment of the above embodiment, the P1 identifiers are configured by the signaling or predefined. As one subsidiary embodiment of the above embodiment, the target identifier is equal to an index of the time-frequency position of the target wake-up signal or a value of an identifier modulo P1. As one subsidiary embodiment of the above embodiment, an index of the target identifier among the P1 identifiers is equal to an index of the time-frequency position of the target wake-up signal or the value of the identifier modulo P1.

As one embodiment, the technical feature "the target identifier is related to a time-frequency position of the target wake-up signal" is implemented by satisfying the following formula:

$$GroupID=(floor(5G\text{-}S\text{-}TMSI/(N^*Ns) + floor(5G\text{-}S\text{-}TMSI/i\_wus)) \bmod GroupNum$$

wherein 5G-S-TMSI is an identifier of the first node device, GroupID represents the target identifier, N represents the number of paging frames in the DRX cycle, Ns represents the number of paging occasions corresponding to one paging frame, GroupNum represents the number of configured device groups, and i_wus represents an index or identifier of the time-frequency position of the target wake-up signal.

As one embodiment, the technical feature "the target identifier is related to a time-frequency position of the target wake-up signal" is implemented by satisfying the following formula:

$$GroupID=(floor(5G\text{-}S\text{-}TMSI/(N^*Ns) + floor(5G\text{-}S\text{-}TMSI/i\_wus)) \bmod GroupNum + Offset$$

wherein 5G-S-TMSI is the identifier of the first node device, GroupID represents the target identifier, N represents the number of paging frames in the DRX cycle, Ns represents the number of paging occasions corresponding to one paging frame, GroupNum represents the number of configured device groups, i_wus represents the index or identifier of the time-frequency position of the target wake-up signal, and Offset represents a configurable or predefined offset value.

As one embodiment, the technical feature "the target identifier is related to a time-frequency position of the target wake-up signal" is implemented by satisfying the following formula:

$$GroupID=(floor(5G\text{-}S\text{-}TMSI/(N^*Ns) + 5G\text{-}S\text{-}TMSI \bmod i\_wus) \bmod GroupNum$$

wherein 5G-S-TMSI is the identifier of the first node device, GroupID represents the target identifier, N represents the number of paging frames in the DRX cycle, Ns represents the number of paging occasions corresponding to one paging frame, GroupNum represents the number of configured device groups, and i_wus represents the index or identifier of the time-frequency position of the target wake-up signal.

As one embodiment, the technical feature "the target identifier is related to a time-frequency position of the target wake-up signal" is implemented by satisfying the following formula:

$$GroupID=(floor(5G\text{-}S\text{-}TMSI/(N*Ns) + 5G\text{-}S\text{-}TMSI \bmod i\_wus) \bmod GroupNum + Offset$$

wherein 5G-S-TMSI is the identifier of the first node device, GroupID represents the target identifier, N represents the number of paging frames in the DRX cycle, Ns represents the number of paging occasions corresponding to one paging frame, GroupNum represents the number of configured device groups, i_wus represents the index or identifier of the time-frequency position of the target wake-up signal, and Offset represents the configurable or predefined offset value.

As one embodiment, the technical feature "the target identifier is related to a time-frequency position of the target wake-up signal" is implemented by satisfying the following formula:

$$GroupID=(floor(5G\text{-}S\text{-}TMSI/(N*Ns) + 5G\text{-}S\text{-}TMSI * i\_wus) \bmod GroupNum$$

wherein 5G-S-TMSI is the identifier of the first node device, GroupID represents the target identifier, N represents the number of paging frames in the DRX cycle, Ns represents the number of paging occasions corresponding to one paging frame, GroupNum represents the number of configured device groups, and i_wus represents the index or identifier of the time-frequency position of the target wake-up signal.

As one embodiment, the technical feature "the target identifier is related to a time-frequency position of the target wake-up signal" is implemented by satisfying the following formula:

$$GroupID=(floor(5G\text{-}S\text{-}TMSI/(N*Ns) + 5G\text{-}S\text{-}TMSI * i\_wus) \bmod GroupNum + Offset$$

wherein 5G-S-TMSI is the identifier of the first node device, GroupID represents the target identifier, N represents the number of paging frames in the DRX cycle, Ns represents the number of paging occasions corresponding to one paging frame, GroupNum represents the number of configured device groups, i_wus represents the index or identifier of the time-frequency position of the target wake-up signal, and Offset represents the configurable or predefined offset value.

## Embodiment 11

Embodiment 11 illustrates a schematic diagram of a first identifier and a second identifier according to one embodiment of the present application, as shown in FIG. 11. In FIG. 11, each rectangle filled with diagonal lines represents one device comprised in a device group corresponding to the first identifier, each rectangle filled with cross lines represents one device comprised in a device group corresponding to the second identifier, and the dotted line with an arrow represents the corresponding identifier assigned.

In Embodiment 11, a first node device in the present application is one device comprised in a first device group, the first device group is one of Y1 device groups, Y1 identifiers correspond to the Y1 device groups, respectively, and any one of the Y1 device groups comprises at least one device, Y1 being a positive integer greater than 1; and the first identifier and the second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

As one embodiment, a fallback or default device group is introduced to provide support for user equipment with different capabilities, thereby ensuring the compatibility of the system.

As one embodiment, the first device group comprises only the first node device.

As one embodiment, the first device group further comprises devices other than the first node device.

As one embodiment, the first device group is configurable, or the first device group is predefined.

As one embodiment, devices comprised in the first device group are assigned by the core network.

As one embodiment, devices comprised in the first device group are determined according to a capability of user equipment.

As one embodiment, the first device group is one subset (or subgroup) of a user equipment set (or user equipment group) corresponding to the same PO.

As one embodiment, the first device group is one subset (or subgroup) of the user equipment set (or user equipment group) monitoring the same PO.

As one embodiment, the first device group is one subset (or subgroup) of the user equipment set (or user equipment group) corresponding to an occasion occupied by a second signaling in the present application.

As one embodiment, the first device group is one subset (or subgroup) of the user equipment set (or user equipment group) that may monitor the second signaling in the present application.

As one embodiment, user equipment comprised in the first device group is determined according to a type of a wake-up signal receiver of the user equipment.

As one embodiment, the user equipment comprised in the first device group is determined according to the type of the user equipment.

As one embodiment, the user equipment comprised in the first device group is determined according to whether the user equipment has a subgroup ID assigned by a core network and whether the user equipment supports subgroup assignment by the core network.

As one embodiment, all pieces of user equipment comprised in the first device group support the subgroup assignment by the core network.

As one embodiment, all pieces of user equipment comprised in the first device group support the subgroup assignment by the core network and have subgroup IDs assigned by the core network that are equal to the same predefined value.

As one embodiment, all pieces of user equipment comprised in the first device group support the subgroup assignment by the core network and have the subgroup IDs assigned by the core network that belong to the same predefined value range.

As one embodiment, all pieces of user equipment comprised in the first device group have the same or similar wake-up signal receiving capability.

As one embodiment, all pieces of user equipment comprised in the first device group use the same or similar wake-up signal receiver.

As one embodiment, all pieces of user equipment comprised in the first device group do not support the subgroup assignment by the core network.

As one embodiment, all pieces of user equipment comprised in the first device group do not support the subgroup assignment by the core network or support the subgroup assignment by the core network but have the subgroup IDs assigned by the core network that are equal to the same predefined value.

As one embodiment, all pieces of user equipment comprised in the first device group do not support the subgroup assignment by the core network or support the subgroup assignment by the core network but have the subgroup IDs assigned by the core network that belong to the same predefined value range.

As one embodiment, the user equipment comprised in the first device group are determined according to identifiers of the user equipment.

As one embodiment, the identifiers of all pieces of user equipment comprised in the first device group have the same modulo value for one configured or predefined parameter.

As one embodiment, the identifiers of all pieces of user equipment comprised in the first device group obtain equal values after a given or predefined operation.

As one embodiment, the identifiers of all pieces of user equipment comprised in the first device group are used as variables to obtain equal results after a target operation function, wherein other parameter values of the target operation function are predefined or configured.

As one embodiment, the identifiers of all pieces of user equipment comprised in the first device group and time-frequency positions of the wake-up signals are used as variables to obtain equal results after the target operation function, wherein other parameter values of the target operation function are predefined or configured.

As one embodiment, Y1 is equal to 2.

As one embodiment, Y1 is greater than 2.

As one embodiment, Y1 is configurable or predefined.

As one embodiment, the Y1 device groups are configurable or predefined.

As one embodiment, a first information block is used for determining the Y1 device groups.

As one embodiment, information blocks other than the first information block are used for determining the Y1 device groups.

As one embodiment, any one of the Y1 device groups is a subgroup.

As one embodiment, any one of the Y1 device groups is a subgroup configured by an IE "subgroupConfig".

As one embodiment, any one of the Y1 device groups is a PEI subgroup.

As one embodiment, one of the Y1 device groups is a subgroup assigned by the core network.

As one embodiment, any one of the Y1 device groups is a subgroup divided based on a UE_ID.

As one embodiment, there exists one device group among the Y1 device groups that is a subgroup divided based on the UE_ID, and there exists another device group among the Y1 device groups that is a subgroup assigned by the core network.

As one embodiment, any two of the Y1 device groups are different.

As one embodiment, there exist two device groups among the Y1 device groups that are the same.

As one embodiment, there exists at least one device group among the Y1 device groups that is a subgroup assigned by the core network, and there exists one device group among the Y1 device groups that is composed of devices that do not support core network assignment.

As one embodiment, any one of the Y1 device groups comprises only one device.

As one embodiment, at least one of the Y1 device groups comprises a plurality of devices.

As one embodiment, the first device group is one device group among the Y1 device groups.

As one embodiment, any one of the Y1 identifiers is a non-negative integer.

As one embodiment, any one of the Y1 identifiers is an integer.

As one embodiment, the technical feature "the Y1 identifiers correspond to the Y1 device groups, respectively" comprises the following meaning: the Y1 identifiers are used for identifying the Y1 device groups, respectively.

As one embodiment, the technical feature "the Y1 identifiers correspond to the Y1 device groups, respectively" comprises the following meaning: the Y1 identifiers are associated with the Y1 device groups, respectively.

As one embodiment, the technical feature "the Y1 identifiers correspond to the Y1 device groups, respectively" comprises the following meaning: the Y1 identifiers are used for the Y1 device groups, respectively.

As one embodiment, the technical feature "the Y1 identifiers correspond to the Y1 device groups, respectively" comprises the following meaning: the Y1 identifiers are predefined or configured for the Y1 device groups, respectively.

As one embodiment, the technical feature "the Y1 identifiers correspond to the Y1 device groups, respectively" comprises the following meaning: the Y1 identifiers are identifiers of the Y1 device groups, respectively.

As one embodiment, the technical feature "the Y1 identifiers correspond to the Y1 device groups, respectively" comprises the following meaning: the Y1 identifiers are assigned or configured or default for the Y1 device groups, respectively.

As one embodiment, the technical feature "the Y1 identifiers correspond to the Y1 device groups, respectively" comprises the following meanings: the Y1 identifiers are identifiers or indexes of configuration sets for the Y1 device groups, respectively.

As one embodiment, there exists one identifier among the Y1 identifiers that is assigned by the core network to the corresponding device group.

As one embodiment, there exists one identifier among the Y1 identifiers that is equal to a default value.

As one embodiment, there exists one identifier among the Y1 identifiers that is equal to the default value when the corresponding device group is not assigned or configured.

As one embodiment, any one of the Y1 identifiers is equal to the identifier or index of one subgroup.

As one embodiment, any one of the Y1 identifiers is equal to the identifier or index of a subgroup configured by one IE "subgroupConfig".

As one embodiment, any one of the Y1 identifiers is equal to the identifier or index of one PEI subgroup.

As one embodiment, the first identifier and the second identifier are unequal.

As one embodiment, the first identifier and the second identifier are independent.

As one embodiment, the first identifier is one of the Y1 identifiers, and the second identifier is one of the Y1 identifiers.

As one embodiment, each device comprised in a device group corresponding to the first identifier among the Y1 device groups is assigned the first identifier.

As one embodiment, each device comprised in a device group corresponding to the first identifier among the Y1 device groups is assigned the first identifier by the core network.

As one embodiment, each device comprised in a device group corresponding to the first identifier among the Y1 device groups is assigned the first identifier by a network device.

As one embodiment, each device comprised in a device group corresponding to the first identifier among the Y1 device groups has one identifier or index assigned by the core network that is equal to the first identifier.

As one embodiment, one device comprised in a device group corresponding to the first identifier among the Y1 device groups is assigned the first identifier by the core network.

As one embodiment, a device group corresponding to the first identifier among the Y1 device groups comprises only one device.

As one embodiment, the device group corresponding to the first identifier among the Y1 device groups comprises a plurality of devices.

As one embodiment, the device group corresponding to the first identifier among the Y1 device groups is the first device group.

As one embodiment, the device group corresponding to the first identifier among the Y1 device groups is a device group other than the first device group.

As one embodiment, "one device is not assigned an identifier" comprises the following meaning: this device does not support being assigned an identifier, or this device supports being assigned an identifier but is not assigned an identifier.

As one embodiment, one device comprised in a device group corresponding to the second identifier among the Y1 device groups does not support being assigned an identifier.

As one embodiment, one device comprised in a device group corresponding to the second identifier among the Y1 device groups is not assigned an identifier.

As one embodiment, one device comprised in a device group corresponding to the second identifier among the Y1 device groups is assigned the second identifier.

As one embodiment, each device comprised in a device group corresponding to the second identifier among the Y1 device groups is assigned the second identifier.

As one embodiment, one device comprised in a device group corresponding to the second identifier among the Y1 device groups is not assigned an identifier, and another device comprised in a device group corresponding to the second identifier among the Y1 device groups is assigned the second identifier.

As one embodiment, any one device comprised in a device group corresponding to the second identifier among the Y1 device groups either does not support being assigned an identifier or is not assigned an identifier or is assigned the second identifier.

As one embodiment, any one device comprised in a device group corresponding to the second identifier among the Y1 device groups either does not support being assigned an identifier by the core network or is not assigned an identifier by the core network or is assigned the second identifier by the core network.

As one embodiment, any one device comprised in a device group corresponding to the second identifier among the Y1 device groups either does not support being assigned an identifier by the network device or is not assigned an identifier by the network device or is assigned the second identifier by the network device.

As one embodiment, the device group corresponding to the second identifier among the Y1 device groups is a fallback device group.

As one embodiment, the device group corresponding to the second identifier among the Y1 device groups is a default device group.

As one embodiment, the device group corresponding to the second identifier among the Y1 device groups comprises only one device.

As one embodiment, the device group corresponding to the second identifier among the Y1 device groups comprises a plurality of devices.

As one embodiment, the device group corresponding to the second identifier among the Y1 device groups is the first device group.

As one embodiment, the device group corresponding to the second identifier among the Y1 device groups is a device group other than the first device group.

As one embodiment, there exists a third identifier among the Y1 identifiers, the third identifier is different from the first identifier, the third identifier is different from the second identifier, and each device comprised in a device group corresponding to the third identifier among the Y1 device groups does not support being assigned an identifier.

As one embodiment, there exists the third identifier among the Y1 identifiers, the third identifier is different from the first identifier, the third identifier is different from the second identifier, and each device comprised in a device group corresponding to the third identifier among the Y1 device groups is not assigned an identifier.

As one embodiment, the first identifier is equal to a target identifier in the present application.

As one embodiment, the first identifier is unequal to the target identifier in the present application.

As one embodiment, the first identifier and the target identifier in the present application are two independent identifiers.

As one embodiment, the first identifier is the target identifier in the present application.

As one embodiment, the second identifier is equal to the target identifier in the present application.

As one embodiment, the second identifier is unequal to the target identifier in the present application.

As one embodiment, the second identifier and the target identifier in the present application are two independent identifiers.

As one embodiment, the second identifier is the target identifier in the present application.

## Embodiment 12

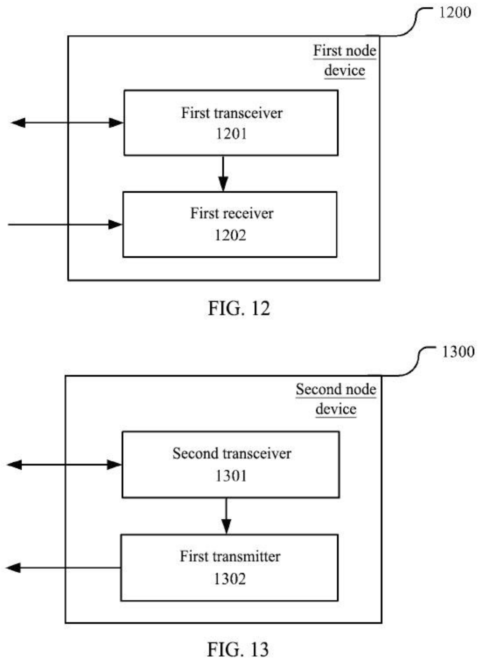

Embodiment 12 illustrates a structural block diagram of a processing apparatus in a first node device according to one embodiment, as shown in FIG. 12. In FIG. 12, a processing apparatus 1200 in the first node device comprises a first transceiver 1201 and a first receiver 1202. The first transceiver 1201 comprises a transmitting device/receiving device 456 (comprising an antenna 460), a receiving processor 452, a transmitting processor 455, and a controller/processor 490 in FIG. 4 of the present application; the first receiver 1202 comprises the transmitting device/receiving device 456 (comprising the antenna 460), the receiving processor 452, and the controller/processor 490 in FIG. 4 of the present application.

In Embodiment 12, the first transceiver 1201 receives a first information block; the first receiver 1202 monitors W1 wake-up signals and determines whether to monitor in a first occasion a first signaling, W1 being a positive integer greater than 1; the first information block is used for determining a configuration parameter value of at least one wake-up signal among the W1 wake-up signals, and an identifier of the first node device is used for determining the first occasion; any one of the W1 wake-up signals carries at least one device group, and any one device group carried by any one of the W1 wake-up signals comprises at least one device; and the number of wake-up signals that carry device groups comprising the first node device among the W1 wake-up signals is used for determining whether to monitor in the first occasion the first signaling.

As one embodiment, when there exists one wake-up signal among the W1 wake-up signals that is not detected or there exists one wake-up signal among the W1 wake-up signals that does not carry any device group comprising the first node device; the first node device abandons monitoring in the first occasion the first signaling; otherwise, the first node device monitors in the first occasion the first signaling.

As one embodiment, the first transceiver 1201 sends a second information block, wherein the second information block is used for indicating at least one band, and the first node device supports reception of wake-up signals on each band indicated by the second information block.

As one embodiment, the first receiver 1202 determines whether to monitor a second signaling; wherein the second signaling is used for indicating whether to monitor in the first occasion the first signaling; and the number of wake-up signals that carry device groups comprising the first node device among the W1 wake-up signals is used for determining whether to monitor the second signaling.

According to one aspect of the present application, the first information block is used for determining the number of wake-up signals associated with the first occasion, and the first information block is used for determining the number of occasions associated with the W1 wake-up signals.

As one embodiment, a target wake-up signal is one wake-up signal among the W1 wake-up signals, and a target identifier is an identifier of one device group to which the first node device belongs; and a first number value is equal to the number of wake-up signals that carry device groups comprising the first node device among the W1 wake-up signals, and whether the target wake-up signal is counted into the first number value is related to whether the target wake-up signal carries the target identifier.

As one embodiment, the first node device is one device comprised in a first device group, the first device group is one of Y1 device groups, Y1 identifiers correspond to the Y1 device groups, respectively, and any one of the Y1 device groups comprises at least one device, Y1 being a positive integer greater than 1; and a first identifier and a second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

## Embodiment 13

Embodiment 13 illustrates a structural block diagram of a processing apparatus in a second node device according to one embodiment, as shown in FIG. 13. In FIG. 13, a processing apparatus 1300 in the second node device comprises a second transceiver 1301 and a first transmitter 1302. The second transceiver 1301 comprises a transmitting device/receiving device 416 (comprising an antenna 460 ), a receiving processor 412, a transmitting processor 415, and a controller/processor 440 in FIG. 4 of the present application; the first transmitter 1302 comprises the transmitting device/receiving device 416 (comprising the antenna 460), the transmitting processor 415, and the controller/processor 440 in FIG. 4 of the present application.

In Embodiment 13, the second transceiver 1301 sends a first information block; the first transmitter 1302 sends W1 wake-up signals and sends in a first occasion a first signaling, W1 being a positive integer greater than 1; the first information block is used for determining a configuration parameter value of at least one wake-up signal among the W1 wake-up signals, and an identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

As one embodiment, when there exists one wake-up signal among the W1 wake-up signals that is not detected or there exists one wake-up signal among the W1 wake-up signals that does not carry any device group comprising the monitor of the W1 wake-up signals, the monitor of the W1 wake-up signals abandons monitoring in the first occasion the first signaling; otherwise, the monitor of the W1 wake-up signals monitors in the first occasion the first signaling.

As one embodiment, the second transceiver 1301 receives a second information block, wherein the second information block is used for indicating at least one band, and a sender of the second information block supports reception of wake-up signals on each band indicated by the second information block.

As one embodiment, the first transmitter 1302 sends a second signaling, wherein the second signaling is used for indicating whether to monitor in the first occasion the first signaling; and the number of wake-up signals that carry device groups comprising the monitor of the W1 wake-up signals among the W1 wake-up signals is used for determining whether to monitor the second signaling.

According to one aspect of the present application, the first information block is used for determining the number of wake-up signals associated with the first occasion, and the first information block is used for determining the number of occasions associated with the W1 wake-up signals.

As one embodiment, a target wake-up signal is one wake-up signal among the W1 wake-up signals, and a target identifier is an identifier of one device group to which the monitor of the W1 wake-up signals belongs; and a first number value is equal to the number of wake-up signals that carry device groups comprising the monitor of the W1 wake-up signals among the W1 wake-up signals, whether the target wake-up signal is counted into the first number value is related to whether the target wake-up signal carries the target identifier, and the target identifier is related to a time-frequency position of the target wake-up signal.

As one embodiment, the monitor of the W1 wake-up signals is one device comprised in a first device group, the first device group is one of Y1 device groups, Y1 identifiers correspond to the Y1 device groups, respectively, and any one of the Y1 device groups comprises at least one device, Y1 being a positive integer greater than 1; and a first identifier and a second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. A first node device or the second node device or UE or a terminal in the present application includes but is not limited to, mobile phones, tablet computers, laptops, network cards, low-power devices, eMTC devices, NB-IoT devices, vehicle-mounted communication devices, aircraft, airplanes, drones, remote-controlled airplanes, and other wireless communication devices. The base station device or base station or network side device in the present application includes but is not limited to, macrocellular base stations, microcellular base stations, Femtocells, relay base stations, eNBs, gNBs, transmitter receiver points (TRPs), relay satellites, satellite base stations, air base stations, and other wireless communication devices.

Those skilled in the art should understand that the present invention may be implemented in other specified forms without departing from its core or basic features. Therefore, the embodiments disclosed at present should be regarded as descriptive rather than restrictive in any way. The scope of the invention is determined by the attached claims rather than the previous description, and all modifications within their equivalent meanings and areas are considered to be comprised therein.

**Claims**

1. A first node device for wireless communication, comprising:

    a first transceiver, receiving a first information block; and
    a first receiver, monitoring W1 wake-up signals and determining whether to monitor in a first occasion a first signaling, W1 being a positive integer greater than 1,
    wherein the first information block is used for determining a configuration parameter value of at least one wake-up signal among the W1 wake-up signals, and an identifier of the first node device is used for determining the first occasion; any one of the W1 wake-up signals carries at least one device group, and any one device group carried by any one of the W1 wake-up signals comprises at least one device; and the number of wake-up signals that carry device groups comprising the first node device among the W1 wake-up signals is used for determining whether to monitor in the first occasion the first signaling.

2. The first node device according to claim 1, wherein when there exists one wake-up signal among the W1 wake-up signals that is not detected or there exists one wake-up signal among the W1 wake-up signals that does not carry any device group comprising the first node device, the first node device abandons monitoring in the first occasion the first signaling; otherwise, the first node device monitors in the first occasion the first signaling.

3. The first node device according to claim 1 or 2, wherein the first transceiver sends a second information block, wherein the second information block is used for indicating at least one band, and the first node device supports reception of wake-up signals on each band indicated by the second information block.

4. The first node device according to any one of claims 1 to 3, wherein the first receiver determines whether to monitor a second signaling, wherein the second signaling is used for indicating whether to monitor in the first occasion the first signaling; and the number of wake-up signals that carry device groups comprising the first node device among the W1 wake-up signals is used for determining whether to monitor the second signaling.

5. The first node device according to any one of claims 1 to 4, wherein the first information block is used for determining the number of wake-up signals associated with the first occasion, and the first information block is used for determining the number of occasions associated with the W1 wake-up signals.

6. The first node device according to any one of claims 1 to 5, wherein a target wake-up signal is one wake-up signal among the W1 wake-up signals, and a target identifier is an identifier of one device group to which the first node device belongs; and a first number value is equal to the number of wake-up signals that carry device groups comprising the first node device among the W1 wake-up signals, whether the target wake-up signal is counted into the first number value is related to whether the target wake-up signal carries the target identifier, and the target identifier is related to a time-frequency position of the target wake-up signal.

7. The first node device according to any one of claims 1 to 6, wherein the first node device is one device comprised in a first device group, the first device group is one of Y1 device groups, Y1 identifiers correspond to the Y1 device groups, respectively, and any one of the Y1 device groups comprises at least one device, Y1 being a positive integer greater than 1; and a first identifier and a second identifier are two different identifiers among the Y1 identifiers, respectively, one device comprised in a device group corresponding to the first identifier among the Y1 device groups is assigned the first identifier, and one device comprised in a device group corresponding to the second identifier among the Y1 device groups is not assigned an identifier or is assigned the second identifier.

8. A second node device for wireless communication, comprising:

a second transceiver, sending a first information block; and
a first transmitter, sending W1 wake-up signals and sending in a first occasion a first signaling, W1 being a positive integer greater than 1,
wherein the first information block is used for determining a configuration parameter value of at least one wake-up signal among the W1 wake-up signals, and an identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

9. A method used in a first node for wireless communication, comprising:

receiving a first information block; and
monitoring W1 wake-up signals and determining whether to monitor in a first occasion a first signaling, W1 being a positive integer greater than 1,
wherein the first information block is used for determining a configuration parameter value of at least one wake-up signal among the W1 wake-up signals, and an identifier of the first node is used for determining the first occasion; any one of the W1 wake-up signals carries at least one device group, and any one device group carried by any one of the W1 wake-up signals comprises at least one device; and the number of wake-up signals that carry device groups comprising the first node among the W1 wake-up signals is used for determining whether to monitor in the first occasion the first signaling.

10. A method used in a second node for wireless communication, comprising:

sending a first information block; and
sending W1 wake-up signals and sending in a first occasion a first signaling, W1 being a positive integer greater than 1,
wherein the first information block is used for determining a configuration parameter value of at least one wake-up signal among the W1 wake-up signals, and an identifier of a monitor of the W1 wake-up signals is used for determining the first occasion; any one of the W1 wake-up signals carries at least one device group, and any one device group carried by any one of the W1 wake-up signals comprises at least one device; and the number of wake-up signals that carry device groups comprising the monitor of the W1 wake-up signals among the W1 wake-up signals is used for determining whether to monitor in the first occasion the first signaling.

100

| Receive a first information block | —101 |

↓

| Monitor W1 wake-up signals and determine whether to monitor in a first occasion a first signaling | —102 |

FIG. 1

5GS/EPS 200

HSS/UDM —220

NR-RAN/EUTRAN 202

UE —201

NR/evolved Node B —203

Other NRs/evolved Node B —204

MME/AMF/SMF —211

Others MME/AMF/SMF —214

S-GW/UPF —212

P-GW/UPF —213

Internet service —230

5GC/EPC 210

UE —241

FIG. 2

Control plane 300

| L3 | RRC | —306 |
| | PDCP | —304 |
| L2 | RLC | —303 |
| | MAC | —302 |
| L1 | PHY | —301 |

305

User plane 350

| L2 | SDAP | —356 |
| | PDCP | —354 |
| | RLC | —353 |
| | MAC | —352 |
| L1 | PHY | —351 |

355

FIG. 3

400                                                                                      450

420        460

416        456

415        455

Transmitting processor — Transmitting device / Receiving device ⟷ Transmitting device / Receiving device — Transmitting processor

440        490

Controller/processor        Controller/processor

420        460

Memory        Receiving processor — Transmitting device / Receiving device ⟷ Transmitting device / Receiving device — Receiving processor        Memory

430        412        416        456        452        480

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| International application No. |
| --- |
| **PCT/CN2024/070058** |

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

IPC：H04W；H04Q

Documentation searched other than minimum documentation to the extent that such documents are included in the fields searched

Electronic data base consulted during the international search (name of data base and, where practicable, search terms used)

CNKI; CNTXT; ENTXTC; DWPI; 3GPP: 唤醒, 配置, 时机, 机会, 次数, 个数, 数目, 数量, 监测, 标识, 识别, 组, 用户, 设备, 终端, WUS, WU, wake up, occassion, number, detect+, monitor+, identif+, group, UE, device, terminal

**C.    DOCUMENTS CONSIDERED TO BE RELEVANT**

| Category* | Citation of document, with indication, where appropriate, of the relevant passages | Relevant to claim No. |
| --- | --- | --- |
| Y | NOKIA et al. "Wake-up Signal Configurations and Procedures" *3GPP TSG RAN WG1 Meeting #92, R1-1802263,* 16 February 2018 (2018-02-16), sections 2-5 | 1-10 |
| Y | US 2022303900 A1 (APPLE INC.) 22 September 2022 (2022-09-22) claims 1-11, and description, paragraphs 34-56 | 1-10 |
| A | CN 114731581 A (TELEFONAKTIEBOLAGET LM ERICSSON (PUBL)) 08 July 2022 (2022-07-08) entire document | 1-10 |
| A | US 2020053645 A1 (MEDIATEK INC.) 13 February 2020 (2020-02-13) entire document | 1-10 |
| A | US 2021037470 A1 (TELEFONAKTIEBOLAGET LM ERICSSON (PUBL)) 04 February 2021 (2021-02-04) entire document | 1-10 |

☐ Further documents are listed in the continuation of Box C.        ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **12 March 2024** | **21 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070058**

| Patent document cited in search report | | | Publication date (day/month/year) | Patent family member(s) | | | Publication date (day/month/year) |
|---|---|---|---|---|---|---|---|
| US | 2022303900 | A1 | 22 September 2022 | WO | 2022077260 | A1 | 21 April 2022 |
| CN | 114731581 | A | 08 July 2022 | WO | 2021104616 | A1 | 03 June 2021 |
| | | | | EP | 4066546 | A1 | 05 October 2022 |
| US | 2020053645 | A1 | 13 February 2020 | TW | 202015480 | A | 16 April 2020 |
| | | | | WO | 2020030100 | A1 | 13 February 2020 |
| | | | | CN | 112703777 | A | 23 April 2021 |
| US | 2021037470 | A1 | 04 February 2021 | EP | 3753305 | A1 | 23 December 2020 |
| | | | | WO | 2019160496 | A1 | 22 August 2019 |

Form PCT/ISA/210 (patent family annex) (July 2022)